# EUROPEAN PATENT APPLICATION

(11) **EP 4 694 307 A1**
(43) Date of publication of application: **11.02.2026**
(21) Application number: 24795431.6
(22) Date of filing: 05.01.2024
(51) Int. Cl.: H04W 28/02

(54) **COMMUNICATION METHOD AND APPARATUS**

(30) Priority: 24.04.2023 CN 202310467126; 20.06.2023 CN 202310744574
(71) Applicant: Huawei Technologies Co., Ltd., Shenzhen, Guangdong 518129 (CN)
(72) Inventor: DOU, Fenghui, Shenzhen, Guangdong 518129 (CN); ZHANG, Yanqing, Shenzhen, Guangdong 518129 (CN)
(74) Representative: Goddar, Heinz J.
(86) International application number: PCT/CN2024/070828
(87) International publication number: WO 2024/222041

(57) **Abstract**

This application relates to a communication method and apparatus. A first network element receives a first message from a second network element, where the first message includes first information, the first information indicates a first mapping relationship between a first parameter and first transmission requirement information, the first parameter indicates a first attribute of a first PDU set, the first transmission requirement information indicates a percentage of a first quantity in a total quantity of PDUs included in the first PDU set, and the first quantity is a quantity of PDUs that need to be correctly transmitted by the first network element during transmission of the first PDU set. The first network element transmits the first PDU set based on the first transmission requirement information. In this application, different PDU set QoS parameters may be set for different PDU sets, to improve control accuracy and transmission flexibility, so that transmission quality can be ensured, and a waste of transmission resources can be reduced.

## Description

### CROSS-REFERENCE TO RELATED APPLICATIONS

This application claims priority to Chinese Patent Application No. 202310467126.9, filed with the China National Intellectual Property Administration on April 24, 2023 and entitled "DATA TRANSMISSION METHOD AND DEVICE", which is incorporated herein by reference in its entirety. This application claims priority to Chinese Patent Application No. 202310744574.9, filed with the China National Intellectual Property Administration on June 20, 2023 and entitled "COMMUNICATION METHOD AND APPARATUS", which is incorporated by reference in its entirety.

### TECHNICAL FIELD

This application relates to the field of communication technologies, and in particular, to a communication method and apparatus.

### BACKGROUND

For services such as virtual reality (virtual reality, VR)/augmented reality (augmented reality, AR)/extended reality (extended reality, XR)/meta gaming (Meta), to improve user experience and save network resources, a quality of service (quality of service, QoS) control mechanism based on a protocol data unit (protocol data unit, PDU) set (set) is supported on an air interface. In other words, parameters such as a delay budget and an error rate are controlled based on a PDU set granularity instead of a single PDU granularity, to ensure transmission integrity and correctness at the PDU set granularity. One PDU set includes one or more PDUs. One PDU set refers to a payload that carries one information unit generated by an application layer. For example, one PDU set may be one frame, one video slice, or the like used for the XR service.

### SUMMARY

For a QoS flow that supports PDU set QoS processing, an access network performs PDU set-based QoS control on a Uu interface based on PDU set QoS parameters (parameters). The PDU set QoS parameters are allocated by using a QoS flow (flow) as a granularity, and all PDU sets corresponding to a same QoS flow use a same set of PDU set QoS parameters. Different PDU set QoS parameters have different requirements on transmission quality. Even PDU sets corresponding to a same QoS flow may have different features. For example, some PDU sets may not need high transmission quality. However, in a conventional mechanism, all PDU sets corresponding to a same QoS flow use a same set of PDU set QoS parameters. In this case, a waste of transmission resources may be caused.

Embodiments of this application provide a communication method and apparatus, to reduce a waste of transmission resources and improve transmission flexibility of a PDU set.

According to a first aspect, a first communication method is provided. The method may be performed by a first network element, may be performed by another device including a function of the first network element, or may be performed by a chip system (or a chip) or another functional module. The chip system or the functional module can implement the function of the first network element. The chip system or the functional module is, for example, disposed in the first network element. The first network element is, for example, an access network element, for example, a base station. The method includes: receiving a first message from a second network element, where the first message includes first information, the first information indicates a first mapping relationship between a first parameter and first transmission requirement information, the first parameter indicates a first attribute of a first PDU set, the first transmission requirement information indicates a percentage of a first quantity in a total quantity of PDUs included in the first PDU set, and the first quantity is a quantity of PDUs that need to be correctly transmitted by the first network element during transmission of the first PDU set; and transmitting the first PDU set based on the first transmission requirement information.

In this embodiment of this application, the first network element may obtain the first information. The first information may include a mapping relationship between a parameter indicating an attribute of a PDU set and transmission requirement information. In the first information, different parameters may correspond to same transmission requirement information, or may correspond to different transmission requirement information. This is equivalent to that different PDU set QoS parameters may be set for different PDU sets. For example, for a PDU set having a transmission quality requirement that is not high, a waste of transmission resources can be reduced by using a PDU set QoS parameter that is set for the PDU set; and for a PDU set having a high transmission quality requirement, transmission quality can be ensured by using a PDU set QoS parameter that is set for the PDU set. In this way, different PDU sets can be separately controlled, to improve control accuracy and transmission flexibility, so that the transmission quality can be ensured, and the waste of transmission resources can be reduced.

In an optional implementation, transmitting the first PDU set based on the first transmission requirement information includes: When the first parameter is a first value, transmitting the first PDU set based on a first percentage, where the first transmission requirement information indicates the first percentage; or when the first parameter is a second value, transmitting the first PDU set based on a second percentage, where the first transmission requirement information indicates the second percentage.

In an optional implementation, transmitting the first PDU set based on the first transmission requirement information includes: When the first parameter indicates a first type, transmitting the first PDU set based on a first percentage, where the first transmission requirement information indicates the first percentage; or when the first parameter indicates a second type, transmitting the first PDU set based on a second percentage, where the first transmission requirement information indicates the second percentage.

In an optional implementation, that the first information indicates the first mapping relationship between the first parameter and the first transmission requirement information includes: The first information indicates the first mapping relationship between the first transmission requirement information and both the first parameter and a second parameter, and the second parameter indicates a second attribute of the first PDU set.

In an optional implementation, transmitting the first PDU set based on the first transmission requirement information includes: When the first parameter is a first value and the second parameter is a third value, transmitting the first PDU set based on a first percentage, where the first transmission requirement information indicates the first percentage; or when the first parameter is a second value and the second parameter is a fourth value, transmitting the first PDU set based on a second percentage, where the first transmission requirement information indicates the second percentage.

In the first information, different parameters may correspond to same transmission requirement information, or may correspond to different transmission requirement information. This is equivalent to that different PDU set QoS parameters may be set for different PDU sets. In this way, the control accuracy and the transmission flexibility are improved, so that the transmission quality can be ensured, and the waste of transmission resources can be reduced. In addition, in the first information, there may be a mapping relationship between transmission requirement information and one or more parameters. This is flexible.

In an optional implementation, the first attribute is importance of the first PDU set, or the first attribute is a type of a service frame corresponding to the first PDU set. Alternatively, this may not be limited thereto. For example, the first attribute may be a priority of the first PDU set, or the like. This is not specifically limited.

In an optional implementation, the first information is included in an N2 SM container in the first message, where the first information is included in a QoS profile in the N2 SM container; or the N2 SM container further includes a QoS profile, and the first information is not included in the QoS profile. The first information may be included in the QoS profile, so that there is no need to add an information element to the N2 SM container to bear the first information, to facilitate compatibility with a conventional technology. Alternatively, the first information may not be included in the QoS profile. For example, the first information exists independently in the N2 SM container, so that it is easier for a receive end to identify the first information.

In an optional implementation, the first information is included in the QoS profile, the QoS profile further includes PSIHI, and the first information is not included in the PSIHI; or the first information is included in PSIHI in the QoS profile. For example, the first information may be used as the PSIHI. It may be understood as that the PSIHI is extended in this embodiment of this application. Therefore, the first information may be included in the PSIHI. Alternatively, the first information may not be included in the PSIHI, so that it is easier for the receive end to identify the first information.

In an optional implementation, the first information further includes first indication information, and the first indication information indicates to notify the second network element when the first network element cannot guarantee the percentage indicated by the first transmission requirement information. The first information can be used to determine whether the first network element can guarantee a percentage indicated by corresponding transmission requirement information. If the first network element can guarantee the percentage, the transmission requirement information may not need to be adjusted, so that steps that need to be performed can be reduced, and PDU transmission efficiency can be improved.

In an optional implementation, the method further includes: when the first network element cannot guarantee the percentage, sending second indication information to the second network element, where the second indication information indicates that the first network element cannot guarantee the percentage. If the first network element cannot guarantee the percentage, the first network element may notify the second network element. For example, the second network element can adjust the percentage to obtain, as much as possible, a percentage that the first network element can guarantee.

In an optional implementation, when the first network element cannot guarantee the percentage, sending the second indication information to the second network element includes: when the first network element cannot guarantee the percentage for the first PDU set, sending the second indication information; or when the first network element cannot guarantee the percentage for PDU sets whose quantity is a first threshold, sending the second indication information, where the PDU sets whose quantity is the first threshold include the first PDU set. The first network element may perform reporting when the percentage cannot be guaranteed for any PDU set (a PDU set corresponding to the percentage), to ensure that a transmission success rate of each PDU set is improved; or may perform reporting when the percentage cannot be guaranteed for the PDU sets whose quantity is the first threshold, to shorten a reporting process.

In an optional implementation, the first threshold is included in the first indication information. Alternatively, the first threshold may be autonomously determined by the first network element, may be preconfigured in the first network element, or may be predefined in a protocol. The first threshold is, for example, a quantity threshold or a percentage threshold.

In an optional implementation, the second indication information further includes transmission requirement information expected (or requested) by the first network element. The first network element may notify the second network element of the expected transmission requirement information, so that the second network element can refer to an expectation of the first network element when determining new transmission requirement information, to obtain transmission requirement information that better meets a capability of the first network element.

According to a second aspect, a second communication method is provided. The method may be performed by a second network element, may be performed by another device including a function of the second network element, or may be performed by a chip system (or a chip) or another functional module. The chip system or the functional module can implement the function of the second network element. The chip system or the functional module is, for example, disposed in the second network element. The second network element is, for example, a core network element, for example, an SMF. The method includes: sending a first message to a first network element, where the first message includes first information, the first information indicates a first mapping relationship between a first parameter and first transmission requirement information, the first parameter indicates a first attribute of a first protocol data unit PDU set, the first transmission requirement information indicates a percentage of a first quantity in a total quantity of PDUs included in the first PDU set, and the first quantity is a quantity of PDUs that need to be correctly transmitted by the first network element during transmission of the first PDU set.

In an optional implementation, when the first parameter is a first value, the first transmission requirement information indicates a first percentage; or when the first parameter is a second value, the first transmission requirement information indicates a second percentage.

In an optional implementation, when the first parameter indicates a first type, the first transmission requirement information indicates a first percentage; or when the first parameter indicates a second type, the first transmission requirement information indicates a second percentage.

In an optional implementation, that the first information indicates the first mapping relationship between the first parameter and the first transmission requirement information includes: The first information indicates the first mapping relationship between the first transmission requirement information and both the first parameter and a second parameter, and the second parameter indicates a second attribute of the first PDU set.

In an optional implementation, when the first parameter is a first value and the second parameter is a third value, the first transmission requirement information indicates a first percentage; or when the first parameter is a second value and the second parameter is a fourth value, the first transmission requirement information indicates a second percentage.

In an optional implementation, the first attribute is importance of the first PDU set, or the first attribute is a type of a service frame corresponding to the first PDU set.

In an optional implementation, the first information is included in an N2 SM container in the first message, where the first information is included in a QoS profile in the N2 SM container; or the N2 SM container further includes a QoS profile, and the first information is not included in the QoS profile.

In an optional implementation, the first information is included in the QoS profile, the QoS profile further includes PSIHI, and the first information is not included in the PSIHI; or the first information is included in PSIHI in the QoS profile.

In an optional implementation, the first information further includes first indication information, and the first indication information indicates to notify the second network element when the first network element cannot guarantee the percentage indicated by the first transmission requirement information.

In an optional implementation, the method further includes: receiving second indication information from the first network element, where the second indication information indicates that the first network element cannot guarantee the percentage.

In an optional implementation, the first network element cannot guarantee the percentage for the first PDU set; or the first network element cannot guarantee the percentage for PDU sets whose quantity is a first threshold, where the PDU sets whose quantity is the first threshold include the first PDU set.

In an optional implementation, the first threshold is included in the first indication information.

In an optional implementation, the second indication information further includes transmission requirement information expected by the first network element.

In an optional implementation, the method further includes: receiving second information from a fourth network element; or autonomously determining second information, where the second information indicates the first mapping relationship, and the first information is determined based on the second information. The fourth network element is, for example, an AF, or may be another network element. Before sending the first information to the first network element, the second network element may first obtain the second information, so that the second network element may obtain the first information based on the second information. For example, the second information indicates at least one mapping relationship, and a mapping relationship included in the first information may be determined based on a mapping relationship included in the second information.

In an optional implementation, the method further includes: sending a third message to the fourth network element, where the third message indicates that the first network element cannot guarantee the percentage indicated by the first transmission requirement information. If the first network element cannot guarantee the percentage, the second network element may send the third message to the fourth network element, and the fourth network element adjusts the transmission requirement information.

In an optional implementation, the method further includes: receiving fourth information from the fourth network element, where the fourth information indicates a second mapping relationship between the first parameter and second transmission requirement information, and a percentage indicated by the second transmission requirement information is less than the percentage indicated by the first transmission requirement information; and sending the fourth information to the first network element. After adjusting the transmission requirement information, the fourth network element may send a new mapping relationship to the second network element, so that the second network element may send the new mapping relationship to the first network element, to execute the new mapping relationship.

In an optional implementation, the method further includes: sending third indication information to a third network element, where the third indication information indicates the third network element to perform network coding; and receiving acknowledgment information from the third network element, where the acknowledgment information is used to acknowledge to perform network coding on the first PDU set, or the acknowledgment information includes a parameter for performing network coding on the first PDU set. If the first network element cannot guarantee the percentage, the second network element may alternatively not need to send a message to the fourth network element, but indicate the third network element to perform network coding. A quantity of transmitted PDUs can be increased through network coding, so that a percentage corresponding to transmission requirement information can be reduced, to reduce a requirement on air interface quality.

In an optional implementation, the third indication information further includes the first parameter. The third indication information may include the first parameter, so that the third network element can determine to perform network coding on the PDU set corresponding to the first parameter.

In an optional implementation, the third indication information further includes the parameter for performing network coding on the first PDU set. The second network element may determine a network coding parameter, and send the network coding parameter to the third network element. In this case, the third network element may not need to determine the network coding parameter.

In an optional implementation, the parameter for performing network coding on the first PDU set includes a network coding scheme or a network coding check percentage.

In an optional implementation, the method further includes: determining third information based on the first information and the parameter for performing network coding on the first PDU set, where the third information indicates a second mapping relationship between the first parameter and third transmission requirement information; and sending the third information to the first network element. The second network element may determine a new mapping relationship (for example, a mapping relationship indicated by the third information) based on the network coding parameter and the first information. In this case, the second network element may send the new mapping relationship to the first network element, to execute the new mapping relationship.

In an optional implementation, determining the third information based on the first mapping relationship and the parameter for performing network coding on the first PDU set includes: determining, based on the percentage indicated by the first transmission requirement information and the network coding check percentage included in the parameter for performing network coding on the first PDU set, a percentage indicated by the third transmission requirement information. For example, the percentage indicated by the third transmission requirement information may be equal to a difference between the percentage indicated by the first transmission requirement information and the network coding check percentage, or the percentage indicated by the third transmission requirement information may be obtained based on the percentage indicated by the first transmission requirement information, the network coding check percentage, and another corresponding algorithm.

For technical effects brought by the second aspect or some optional implementations, refer to the descriptions of the technical effects of the first aspect or the corresponding implementations.

According to a third aspect, a third communication method is provided. The method may be performed by a first network element, may be performed by another device including a function of the first network element, or may be performed by a chip system (or a chip) or another functional module. The chip system or the functional module can implement the function of the first network element. The chip system or the functional module is, for example, disposed in the first network element. The first network element is, for example, an access network element, for example, a base station. The method includes: receiving a first PDU from a third network element; obtaining first transmission requirement information carried in the first PDU, where the first transmission requirement information indicates a percentage of a first quantity in a total quantity of PDUs included in a first PDU set, the first quantity is a quantity of PDUs that need to be correctly transmitted by the first network element during transmission of the first PDU set, and the first PDU set is a PDU set to which the first PDU belongs; and transmitting the first PDU set based on the first transmission requirement information.

In this embodiment of this application, a UPF may include transmission requirement information in a PDU. In this case, different PDU sets may correspond to same transmission requirement information, or may correspond to different transmission requirement information. This is equivalent to that different PDU set QoS parameters may be set for different PDU sets. For example, for a PDU set having a transmission quality requirement that is not high, a waste of transmission resources can be reduced by using a PDU set QoS parameter that is set for the PDU set; and for a PDU set having a high transmission quality requirement, transmission quality can be ensured by using a PDU set QoS parameter that is set for the PDU set. In this way, different PDU sets can be separately controlled, to improve control accuracy and transmission flexibility, so that the transmission quality can be ensured, and the waste of transmission resources can be reduced.

In an optional implementation, the method further includes: sending fifth indication information to the third network element or a second network element, where the fifth indication information indicates that the first network element does not support the percentage indicated by the first transmission requirement information. If the first network element cannot guarantee the percentage, the first network element may notify the second network element or the third network element. For example, the second network element or the third network element can adjust the percentage, to obtain, as much as possible, a percentage that the first network element can guarantee.

In an optional implementation, the fifth indication information further includes transmission requirement information expected by the first network element. The first network element may notify the second network element or the third network element of the expected transmission requirement information, so that the second network element or the third network element can refer to an expectation of the first network element when determining new transmission requirement information, to obtain transmission requirement information that better meets a capability of the first network element.

In an optional implementation, the method further includes: receiving a second PDU from the third network element, where the second PDU belongs to the first PDU set; obtaining second transmission requirement information carried in the second PDU; and transmitting the first PDU set based on the second transmission requirement information. After the second network element or the third network element adjusts transmission requirement information, the third network element may continue to transmit a PDU set, and the first network element may transmit the PDU set based on new transmission requirement information.

In an optional implementation, the method further includes: receiving fourth indication information from the second network element, where the fourth indication information indicates to parse transmission requirement information carried in a PDU (or a PDU set). After receiving the fourth indication information, the first network element can determine to parse the transmission requirement information carried in the PDU (or the PDU set). In this case, after receiving the PDU (or the PDU set), the first network element may parse the transmission requirement information carried in the PDU (or the PDU set). It can be learned that the first network element can obtain the transmission requirement information by parsing the PDU without additionally receiving the transmission requirement information, so that transmission overheads can be reduced.

According to a fourth aspect, a fourth communication method is provided. The method may be performed by a second network element, may be performed by another device including a function of the second network element, or may be performed by a chip system (or a chip) or another functional module. The chip system or the functional module can implement the function of the second network element. The chip system or the functional module is, for example, disposed in the second network element. The second network element is, for example, a core network element, for example, an SMF. The method includes: sending fourth indication information to a first network element, where the fourth indication information indicates to parse transmission requirement information carried in a PDU, and the transmission requirement information indicates a percentage of a quantity of PDUs that need to be correctly transmitted in a PDU set in a total quantity of PDUs included in the PDU set.

In an optional implementation, the method further includes: receiving the fourth indication information from a fourth network element. The fourth indication information may be from the fourth network element, or may be autonomously determined by the second network element.

In an optional implementation, the method further includes: receiving fifth indication information from the first network element, where the fifth indication information indicates that the first network element does not support a percentage indicated by first transmission requirement information.

In an optional implementation, the method further includes: sending third indication information to a third network element, where the third indication information indicates the third network element to perform network coding; and receiving acknowledgment information from the third network element, where the acknowledgment information is used to acknowledge to perform network coding on a PDU set, or the acknowledgment information includes a parameter for performing network coding on the PDU set.

In an optional implementation, the third indication information further includes a first parameter, and the first parameter indicates a first attribute of a PDU set corresponding to the first transmission requirement information.

In an optional implementation, the third indication information further includes the parameter for performing network coding on the PDU set.

In an optional implementation, the parameter for performing network coding on the PDU set includes a network coding scheme or a network coding check percentage.

In an optional implementation, the method further includes: determining second transmission requirement information based on the first transmission requirement information and the parameter for performing network coding on the PDU set; and sending the second transmission requirement information to the third network element.

In an optional implementation, determining the second transmission requirement information based on the first transmission requirement information and the parameter for performing network coding on the PDU set includes: determining, based on the percentage indicated by the first transmission requirement information and the network coding check percentage included in the parameter for performing network coding on the PDU set, a percentage indicated by the second transmission requirement information.

In an optional implementation, the method further includes: sending a third message to the fourth network element, where the third message indicates that the first network element cannot guarantee the percentage indicated by the first transmission requirement information.

For technical effects brought by the fourth aspect or the optional implementations, refer to the descriptions of the technical effects of the third aspect or the corresponding implementations, or refer to the descriptions of the technical effects of the first aspect or the corresponding implementations.

According to a fifth aspect, a fifth communication method is provided. The method may be performed by a third network element, may be performed by another device including a function of the third network element, or may be performed by a chip system (or a chip) or another functional module. The chip system or the functional module can implement the function of the third network element. The chip system or the functional module is, for example, disposed in the third network element. The third network element is, for example, a core network element, for example, a UPF. The method includes: including first transmission requirement information in a PDU included in a first PDU set, where the first transmission requirement information indicates a percentage of a first quantity in a total quantity of PDUs included in the first PDU set, and the first quantity is a quantity of PDUs that need to be correctly transmitted by the first network element during transmission of the first PDU set; and sending the PDU included in the first PDU set to a first network element.

In an optional implementation, the method further includes: receiving fifth indication information from the first network element, where the fifth indication information indicates that the first network element does not support the percentage indicated by the first transmission requirement information.

In an optional implementation, the fifth indication information further includes transmission requirement information expected by the first network element.

In an optional implementation, third indication information is received from a second network element, where the third indication information indicates the third network element to perform network coding; and acknowledgment information is sent to the second network element, where the acknowledgment information is used to acknowledge to perform network coding on the first PDU set, or the acknowledgment information includes a parameter for performing network coding on the first PDU set.

In an optional implementation, the third indication information further includes the parameter for performing network coding on the first PDU set.

In an optional implementation, the parameter for performing network coding on the first PDU set includes a network coding scheme or a network coding check percentage.

In an optional implementation, the method further includes: performing network coding on the PDU included in the first PDU set, where after the network coding is performed, transmission requirement information of the first PDU set is changed to second transmission requirement information; and sending the PDU included in the first PDU set to the first network element, where the PDU included in the first PDU set carries the second transmission requirement information.

In an optional implementation, the method further includes: determining the second transmission requirement information based on the first transmission requirement information and the parameter for performing network coding on the first PDU set.

In an optional implementation, determining the second transmission requirement information based on the first transmission requirement information and the parameter for performing network coding on the first PDU set includes: determining, based on the percentage indicated by the first transmission requirement information and the network coding check percentage included in the parameter for performing network coding on the first PDU set, a percentage indicated by the second transmission requirement information.

In an optional implementation, the method further includes: receiving the first transmission requirement information from a fourth network element; or determining the first transmission requirement information based on information about the third network element. The first transmission requirement information may be indicated by the fourth network element, or may be autonomously determined by the third network element. For example, the third network element may determine the first transmission requirement information based on a factor like a capability of the third network element or network quality.

For technical effects brought by the fifth aspect or the optional implementations, refer to the descriptions of the technical effects of the third aspect or the corresponding implementations, or refer to the descriptions of the technical effects of the fourth aspect or the corresponding implementations.

According to a sixth aspect, a sixth communication method is provided. The method may be performed by a first network element, may be performed by another device including a function of the first network element, or may be performed by a chip system (or a chip) or another functional module. The chip system or the functional module can implement the function of the first network element. The chip system or the functional module is, for example, disposed in the first network element. The first network element is, for example, an access network element, for example, a base station. The method includes: receiving first indication information from a second network element, where the first indication information indicates to notify the second network element when the first network element cannot guarantee a percentage indicated by first transmission requirement information, the first transmission requirement information indicates a percentage of a first quantity in a total quantity of PDUs included in a first PDU set, and the first quantity is a quantity of PDUs that need to be correctly transmitted by the first network element during transmission of the first PDU set; and when the first network element cannot guarantee the percentage, sending second indication information to the second network element, where the second indication information indicates that the first network element cannot guarantee the percentage, or indicates a percentage that the first network element cannot guarantee.

In an optional implementation, the first indication information further includes the first transmission requirement information; or the first indication information is included in first information, the first information further indicates a mapping relationship between a first parameter and the first transmission requirement information, and the first parameter indicates a first attribute of the first PDU set.

In an optional implementation, when the first network element cannot guarantee the percentage, sending the second indication information to the second network element includes: when the first network element cannot guarantee the percentage for a PDU set, sending the second indication information; or when the first network element cannot guarantee the percentage for PDU sets whose quantity is a first threshold, sending the second indication information, where the PDU sets whose quantity is the first threshold include the first PDU set.

In an optional implementation, the first threshold is included in the first indication information.

In an optional implementation, the second indication information further includes transmission requirement information expected by the first network element.

In an optional implementation, the method further includes: receiving second transmission requirement information from the second network element; and transmitting the first PDU set based on the second transmission requirement information.

In an optional implementation, the method further includes: receiving third information from the second network element, where the third information includes a mapping relationship between the first parameter and third transmission requirement information; and transmitting the first PDU set based on the third transmission requirement information.

For technical effects brought by the sixth aspect or the optional implementations, refer to the descriptions of the technical effects of any one or more aspects of the first aspect to the fifth aspect or the corresponding implementations.

According to a seventh aspect, a seventh communication method is provided. The method may be performed by a second network element, may be performed by another device including a function of the second network element, or may be performed by a chip system (or a chip) or another functional module. The chip system or the functional module can implement the function of the second network element. The chip system or the functional module is, for example, disposed in the second network element. The second network element is, for example, a core network element, for example, an SMF. The method includes: sending first indication information to a first network element, where the first indication information indicates to notify the second network element when the first network element cannot guarantee a percentage indicated by first transmission requirement information, the first transmission requirement information indicates a percentage of a first quantity in a total quantity of PDUs included in a first PDU set, and the first quantity is a quantity of PDUs that need to be correctly transmitted by the first network element during transmission of the first PDU set; and receiving second indication information from the first network element, where the second indication information indicates that the first network element cannot guarantee the percentage.

In an optional implementation, the first indication information further includes the first transmission requirement information; or the first indication information is included in first information, the first information further indicates a mapping relationship between a first parameter and the first transmission requirement information, and the first parameter indicates a first attribute of the first PDU set.

In an optional implementation, the first indication information further includes the first transmission requirement information, where the first network element cannot guarantee the percentage for a PDU set; or the first network element cannot guarantee the percentage for PDU sets whose quantity is a first threshold, where the PDU sets whose quantity is the first threshold include the first PDU set.

In an optional implementation, the first threshold is included in the first indication information.

In an optional implementation, the second indication information further includes transmission requirement information expected by the first network element.

In an optional implementation, the method further includes: sending third indication information to a third network element, where the third indication information indicates the third network element to perform network coding; and receiving acknowledgment information from the third network element, where the acknowledgment information is used to acknowledge to perform network coding on the first PDU set, or the acknowledgment information includes a parameter for performing network coding on the first PDU set.

In an optional implementation, the third indication information further includes the first parameter, and the first parameter indicates the first attribute of the first PDU set.

In an optional implementation, the third indication information further includes the parameter for performing network coding on the first PDU set.

In an optional implementation, the parameter for performing network coding on the first PDU set includes a network coding scheme or a network coding check percentage.

In an optional implementation, the method further includes: determining second transmission requirement information based on the first transmission requirement information and the parameter for performing network coding on the first PDU set; and sending the second transmission requirement information to the first network element.

In an optional implementation, determining the second transmission requirement information based on the first transmission requirement information and the parameter for performing network coding on the first PDU set includes: determining, based on the percentage indicated by the first transmission requirement information and the network coding check percentage included in the parameter for performing network coding on the first PDU set, a percentage indicated by the second transmission requirement information.

In an optional implementation, the method further includes: sending third indication information to a third network element, where the third indication information indicates the third network element to perform network coding; and receiving acknowledgment information from the third network element, where the acknowledgment information is used to acknowledge to perform network coding on the first PDU set, or the acknowledgment information includes a parameter for performing network coding on the first PDU set.

In an optional implementation, the third indication information further indicates a second mapping relationship between the first parameter and transmission requirement information.

In an optional implementation, the third indication information further includes a parameter for performing network coding on a PDU set.

In an optional implementation, the method further includes: determining third information based on the first information and the parameter for performing network coding on the first PDU set, where the third information indicates a second mapping relationship between the first parameter and third transmission requirement information; and sending the third information to the first network element.

In an optional implementation, determining a third mapping relationship based on a first mapping relationship and the parameter for performing network coding on the first PDU set includes: determining, based on the percentage indicated by the first transmission requirement information and a network coding check percentage included in the parameter for performing network coding on the first PDU set, a percentage indicated by the third transmission requirement information.

In an optional implementation, the method further includes: sending a first message to a fourth network element, where the first message indicates that the first network element cannot guarantee the percentage.

In an optional implementation, the method further includes: receiving fourth transmission requirement information from the fourth network element, where a percentage indicated by the fourth transmission requirement information is less than the percentage indicated by the first transmission requirement information; and sending the fourth transmission requirement information to the first network element.

In an optional implementation, the method further includes: receiving fourth information from the fourth network element, where the fourth information indicates a second mapping relationship between the first parameter and the second transmission requirement information, and the percentage indicated by the second transmission requirement information is less than the percentage indicated by the first transmission requirement information; and sending the fourth information to the first network element.

For technical effects brought by the seventh aspect or the optional implementations, refer to the descriptions of the technical effects of any one or more aspects of the first aspect to the sixth aspect or the corresponding implementations.

According to an eighth aspect, an eighth communication method is provided. The method may be performed by a third network element, may be performed by another device including a function of the third network element, or may be performed by a chip system (or a chip) or another functional module. The chip system or the functional module can implement the function of the third network element. The chip system or the functional module is, for example, disposed in the third network element. The third network element is, for example, a core network element, for example, a UPF. The method includes: performing network coding on a PDU included in a first PDU set; and sending the PDU included in the first PDU set to a first network element.

In an optional implementation, the PDU included in the first PDU set carries first transmission requirement information, where the first transmission requirement information indicates a percentage of a first quantity in a total quantity of PDUs included in the first PDU set, and the first quantity is a quantity of PDUs that need to be correctly transmitted by the first network element during transmission of the first PDU set.

In an optional implementation, the method further includes: receiving fifth indication information from the first network element, where the fifth indication information indicates that the first network element does not support the percentage.

In an optional implementation, the fifth indication information further includes transmission requirement information expected by the first network element.

In an optional implementation, the method further includes: receiving third indication information from a second network element, where the third indication information indicates the third network element to perform network coding; and sending acknowledgment information to the second network element, where the acknowledgment information is used to acknowledge to perform network coding on the first PDU set, or the acknowledgment information includes a parameter for performing network coding on the first PDU set.

In an optional implementation, the third indication information further includes a first parameter, and the first parameter indicates a first attribute of the first PDU set.

In an optional implementation, the third indication information further includes the parameter for performing network coding on the first PDU set.

In an optional implementation, the parameter for performing network coding on the first PDU set includes a network coding scheme or a network coding check percentage.

In an optional implementation, the method further includes: determining second transmission requirement information based on the first transmission requirement information and the parameter for performing network coding on the first PDU set.

In an optional implementation, determining the second transmission requirement information based on the first transmission requirement information and the parameter for performing network coding on the first PDU set includes: determining, based on the percentage indicated by the first transmission requirement information and the network coding check percentage included in the parameter for performing network coding on the first PDU set, a percentage indicated by the second transmission requirement information.

For technical effects brought by the eighth aspect or the optional implementations, refer to the descriptions of the technical effects of any one or more aspects of the first aspect to the seventh aspect or the corresponding implementations.

According to a ninth aspect, a ninth communication method is provided. The method may be performed by a second network element, may be performed by another device including a function of the second network element, or may be performed by a chip system (or a chip) or another functional module. The chip system or the functional module can implement the function of the second network element. The chip system or the functional module is, for example, disposed in the second network element. The second network element is, for example, a core network element, for example, an SMF. The method includes: sending third indication information to a third network element, where the third indication information indicates the third network element to perform network coding; and receiving acknowledgment information from the third network element, where the acknowledgment information is used to acknowledge to perform network coding on a first PDU set, or the acknowledgment information includes a parameter for performing network coding on the first PDU set.

In an optional implementation, the third indication information further includes a first parameter, and the first parameter indicates a first attribute of the first PDU set.

In an optional implementation, the third indication information further includes the parameter for performing network coding on the first PDU set.

In an optional implementation, the parameter for performing network coding on the first PDU set includes a network coding scheme or a network coding check percentage.

In an optional implementation, the method further includes: determining second transmission requirement information based on first transmission requirement information and the parameter for performing network coding on the first PDU set; and sending the second transmission requirement information to a first network element.

In an optional implementation, determining the second transmission requirement information based on the first transmission requirement information and the parameter for performing network coding on the first PDU set includes: determining, based on a percentage indicated by the first transmission requirement information and the network coding check percentage included in the parameter for performing network coding on the first PDU set, a percentage indicated by the second transmission requirement information.

In an optional implementation, the method further includes: determining third information based on first information and the parameter for performing network coding on the first PDU set, where the first information indicates a first mapping relationship between the first parameter and the first transmission requirement information, the first parameter indicates the first attribute of the first PDU set, the first transmission requirement information indicates a percentage of a first quantity in a total quantity of PDUs included in the first PDU set, and the first quantity is a quantity of PDUs that need to be correctly transmitted by the first network element during transmission of the first PDU set; and sending the third information to the first network element.

In an optional implementation, determining a third mapping relationship based on the first information and the parameter for performing network coding on the first PDU set includes: determining, based on the percentage indicated by the first transmission requirement information and the network coding check percentage included in the parameter for performing network coding on the first PDU set, a percentage indicated by the third information.

In an optional implementation, the method further includes: sending first indication information to the first network element, where the first indication information indicates to notify the second network element when the first network element cannot guarantee the percentage indicated by the first transmission requirement information.

In an optional implementation, the method further includes: receiving second indication information from the first network element, where the second indication information indicates that the first network element cannot guarantee the percentage.

In an optional implementation, the first indication information further includes the first transmission requirement information; or the first indication information is included in the first information, and the first information further indicates the mapping relationship between the first parameter and the first transmission requirement information.

In an optional implementation, the first indication information further includes the first transmission requirement information, where the first network element cannot guarantee, for the first PDU set, the percentage indicated by the first transmission requirement information; or the first network element cannot guarantee, for PDU sets whose quantity is a first threshold, the percentage indicated by the first transmission requirement information, where the PDU sets whose quantity is the first threshold include the first PDU set.

In an optional implementation, the first threshold is included in the first indication information.

In an optional implementation, the second indication information further includes transmission requirement information expected by the first network element.

For technical effects brought by the ninth aspect or the optional implementations, refer to the descriptions of the technical effects of any one or more aspects of the first aspect to the eighth aspect or the corresponding implementations.

According to a tenth aspect, a communication apparatus is provided. The communication apparatus may be the first network element according to any one of the first aspect to the ninth aspect. The communication apparatus has a function of the first network element. The communication apparatus is, for example, the first network element, a large device including the first network element, or a functional module, for example, a baseband apparatus or a chip system, in the first network element. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the receiving unit) is configured to receive a first message from a second network element, where the first message includes first information, the first information indicates a first mapping relationship between a first parameter and first transmission requirement information, the first parameter indicates a first attribute of a first protocol data unit PDU set set, the first transmission requirement information indicates a percentage of a first quantity in a total quantity of PDUs included in the first PDU set, and the first quantity is a quantity of PDUs that need to be correctly transmitted by the first network element during transmission of the first PDU set. The transceiver unit (or the sending unit) is configured to transmit the first PDU set based on the first transmission requirement information.

In an optional implementation, the transceiver unit (or the receiving unit) is configured to receive a first PDU from a third network element. The processing unit is configured to obtain first transmission requirement information carried in the first PDU, where the first transmission requirement information indicates a percentage of a first quantity in a total quantity of PDUs included in a first PDU set, the first quantity is a quantity of PDUs that need to be correctly transmitted by the first network element during transmission of the first PDU set, and the first PDU set is a PDU set to which the first PDU belongs. The transceiver unit (or the sending unit) is configured to transmit the first PDU set based on the first transmission requirement information.

In an optional implementation, the transceiver unit (or the receiving unit) is configured to receive first indication information from a second network element, where the first indication information indicates to notify the second network element when the first network element cannot guarantee a percentage indicated by first transmission requirement information, the first transmission requirement information indicates a percentage of a first quantity in a total quantity of PDUs included in a first PDU set, and the first quantity is a quantity of PDUs that need to be correctly transmitted by the first network element during transmission of the first PDU set. The transceiver unit (or the sending unit) is configured to: when the first network element cannot guarantee the percentage, send second indication information to the second network element, where the second indication information indicates that the first network element cannot guarantee the percentage, or indicates a percentage that the first network element cannot guarantee.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the first network element according to any one of the first aspect to the ninth aspect.

According to an eleventh aspect, a communication apparatus is provided. The communication apparatus may be the second network element according to any one of the first aspect to the ninth aspect. The communication apparatus has a function of the second network element. The communication apparatus is, for example, the second network element, a large device including the second network element, or a functional module, for example, a baseband apparatus or a chip system, in the second network element. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions of the tenth aspect.

In an optional implementation, the transceiver unit (or the sending unit) is configured to send a first message to a first network element, where the first message includes first information, the first information indicates a first mapping relationship between a first parameter and first transmission requirement information, the first parameter indicates a first attribute of a first protocol data unit PDU set, the first transmission requirement information indicates a percentage of a first quantity in a total quantity of PDUs included in the first PDU set, and the first quantity is a quantity of PDUs that need to be correctly transmitted by the first network element during transmission of the first PDU set.

In an optional implementation, the transceiver unit (or the sending unit) is configured to send fourth indication information to a first network element, where the fourth indication information indicates to parse transmission requirement information carried in a PDU, and the transmission requirement information indicates a percentage of a quantity of PDUs that need to be correctly transmitted in a PDU set in a total quantity of PDUs included in the PDU set.

In an optional implementation, the transceiver unit (or the sending unit) is configured to send first indication information to a first network element, where the first indication information indicates to notify the second network element when the first network element cannot guarantee a percentage indicated by first transmission requirement information, the first transmission requirement information indicates a percentage of a first quantity in a total quantity of PDUs included in a first PDU set, and the first quantity is a quantity of PDUs that need to be correctly transmitted by the first network element during transmission of the first PDU set. The transceiver unit (or the receiving unit) is configured to receive second indication information from the first network element, where the second indication information indicates that the first network element cannot guarantee the percentage.

In an optional implementation, the transceiver unit (or the sending unit) is configured to send third indication information to a third network element, where the third indication information indicates the third network element to perform network coding. The transceiver unit (or the receiving unit) is configured to receive acknowledgment information from the third network element, where the acknowledgment information is used to acknowledge to perform network coding on a first PDU set, or the acknowledgment information includes a parameter for performing network coding on the first PDU set.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the second network element according to any one of the first aspect to the ninth aspect.

According to a twelfth aspect, a communication apparatus is provided. The communication apparatus may be the third network element according to any one of the first aspect to the ninth aspect. The communication apparatus has a function of the third network element. The communication apparatus is, for example, the third network element, a large device including the third network element, or a functional module, for example, a baseband apparatus or a chip system, in the third network element. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions of the tenth aspect.

In an optional implementation, the processing unit is configured to include first transmission requirement information in a PDU included in a first PDU set, where the first transmission requirement information indicates a percentage of a first quantity in a total quantity of PDUs included in the first PDU set, and the first quantity is a quantity of PDUs that need to be correctly transmitted by the first network element during transmission of the first PDU set. The transceiver unit (or the sending unit) is configured to send the PDU included in the first PDU set to a first network element.

In an optional implementation, the processing unit is configured to perform network coding on a PDU included in a first PDU set. The transceiver unit (or the sending unit) is configured to send the PDU included in the first PDU set to a first network element.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform the function of the third network element according to any one of the first aspect to the ninth aspect.

According to a thirteenth aspect, a communication apparatus is provided. The communication apparatus may be a first network element, or may be a chip or a chip system used in the first network element. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the first network element in the foregoing aspects.

According to a fourteenth aspect, a communication apparatus is provided. The communication apparatus may be a second network element, or may be a chip or a chip system used in the second network element. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the second network element in the foregoing aspects.

According to a fifteenth aspect, a communication apparatus is provided. The communication apparatus may be a third network element, or may be a chip or a chip system used in the third network element. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the third network element in the foregoing aspects.

According to a sixteenth aspect, a communication system is provided, including a first network element and a second network element, where the first network element is configured to perform the method performed by the first network element according to any one of the first aspect to the ninth aspect, and the second network element is configured to perform the method performed by the second network element according to any one of the first aspect to the ninth aspect. For example, the first network element may be implemented by the communication apparatus according to the tenth aspect or the thirteenth aspect, and the second network element may be implemented by the communication apparatus according to the eleventh aspect or the fourteenth aspect.

Optionally, the communication system further includes a third network element, and the third network element is configured to perform the method performed by the third network element according to any one of the first aspect to the ninth aspect. For example, the third network element may be implemented by the communication apparatus according to the twelfth aspect or the fifteenth aspect.

According to a seventeenth aspect, a computer-readable storage medium is provided. The computer-readable storage medium is configured to store a computer program or instructions. When the computer program or the instructions are run, the method performed by the first network element, the second network element, or the third network element according to the foregoing aspects is implemented.

According to an eighteenth aspect, a computer program product including instructions is provided. When the computer program product runs on a computer, the method according to the foregoing aspects is implemented.

According to a nineteenth aspect, a chip system is provided, including a processor and an interface. The processor is configured to: invoke instructions from the interface, and run the instructions, to enable the chip system to implement the method according to the foregoing aspects.

### BRIEF DESCRIPTION OF DRAWINGS

FIG. 1 is a diagram of a communication network architecture to which an embodiment of this application is applicable;
FIG. 2 is a flowchart of a first communication method according to an embodiment of this application;
FIG. 3 is a flowchart of a second communication method according to an embodiment of this application;
FIG. 4 is a flowchart of a third communication method according to an embodiment of this application;
FIG. 5 is a diagram of an apparatus according to an embodiment of this application; and
FIG. 6 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns indicates "a singular noun or a plural noun", that is, "one or more". "At least one" means one or more, and "a plurality of" means two or more. The term "or" describes an association relationship between associated objects and indicates that three relationships may exist. For example, A or B may indicate the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one (piece) of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, and are not intended to limit sizes, content, a sequence, a time sequence, priorities, importance, or the like of the plurality of objects. In addition, step numbers in embodiments described in embodiments of this application are merely intended to distinguish between different steps, but are not intended to limit a sequence of the steps. For example, S201 may be performed before S202, may be performed after S202, or may be performed simultaneously with S202.

The following describes some terms or concepts in embodiments of this application, to facilitate understanding of a person skilled in the art.
(1) In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: cellular communication, device-to-device (device-to-device, D2D) communication, vehicle to everything (vehicle to everything, V2X), machine-to-machine/machine-type communications (machine-to-machine/machine-type communication, M2M/MTC), an internet of things (internet of things, IoT), VR, AR, XR, Meta, industrial control (industrial control), self driving (self driving), telemedicine (remote medical), a smart grid (smart grid), smart furniture, smart office, a smart wearable (for example, a smart watch, a smart band, a smart helmet, or smart glasses), smart transportation, a smart city (smart city), an uncrewed aerial vehicle, a robot, and the like. The terminal device may be sometimes referred to as user equipment (user equipment, UE), a terminal, an access station, a UE station, a customer-premises equipment (customer-premises equipment, CPE), a remote station, a wireless communication device, a user apparatus, or the like.
   In embodiments of this application, a communication apparatus configured to implement a function of the terminal device may be the terminal device, or may be an apparatus, for example, a chip system, that can support the terminal device in implementing the function. The apparatus may be installed in the terminal device. In the technical solutions provided in embodiments of this application, the technical solutions provided in embodiments of this application are described by using an example in which the apparatus configured to implement the function of the terminal device is the terminal device. In addition, for ease of description, an example in which the terminal device is UE is used for description in embodiments of this application.
(2) A network device in embodiments of this application includes, for example, an access network (access network, AN) device or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequently evolved base station in the 3rd generation partnership project (3rd generation partnership project, 3GPP), an access node in a wireless fidelity (wireless fidelity, Wi-Fi) system, a wireless relay node, a wireless backhaul node, or the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), or a distributed unit (distributed unit, DU) in a cloud radio access network (cloud radio access network, CRAN) scenario. Alternatively, the access network device may be a server or the like. For example, a network device in a vehicle-to-everything (vehicle-to-everything, V2X) technology may be a road side unit (road side unit, RSU). The following provides descriptions by using an example in which the access network device is a base station. The base station may communicate with the terminal device, or may communicate with the terminal device via a relay station. The terminal device may communicate with the plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be the network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

The following describes technical features in embodiments of this application.

For a QoS flow that supports PDU set QoS processing, an SMF in a core network sends a PDU set QoS parameter to an access network over a control plane, and a UPF in the core network sends PDU set information (information) to the access network over a user plane, the access network performs PDU set-based QoS control on a Uu interface based on the PDU set QoS parameter and the PDU set information. The PDU set QoS parameter includes a PDU set delay budget (PDU set delay budget, PSDB), a PDU set error rate (PDU set error rate, PSER), and PDU set integrated handling information (PDU set integrated handling information, PSIHI). The PSDB defines an upper limit of a possible delay that may be experienced during transmission of a PDU set between UE and a UPF. The PSER defines an upper limit of a percentage of PDU sets that have been processed by using a link layer protocol of a sending party (for example, radio link control (radio link control, RLC) in a (radio) access network (radio access network, (R)AN) accessed in the 3rd generation partnership project (3rd generation partnership project, 3GPP)) but have not been successfully sent by a corresponding receiving party to an upper layer of the receiving party (for example, a packet data convergence protocol (packet data convergence protocol, PDCP) in the (R)AN accessed in the 3GPP). The PSIHI indicates whether an application layer of the receiving party needs to decode all PDUs in the PDU set.

The PDU set information may include a sequence number (or an index) of a PDU set, an indication of a last PDU in the PDU set, a sequence number (or an index) of a PDU included in the PDU set, a size (for example, in a unit of byte) of the PDU set, and importance of the PDU set. The importance of the PDU set may indicate relative importance of the PDU set compared with another PDU set in a same QoS flow. For example, when congestion exists, the (R)AN may perform PDU set discarding based on importance of a PDU set in a QoS flow.

Conventionally, both the PDU set QoS parameter and the PDU set information are allocated at a granularity of a QoS flow, and all PDU sets corresponding to a same QoS flow use a same set of PDU set QoS parameters and PDU set information. Different PDU set QoS parameters have different requirements on transmission quality. Even PDU sets corresponding to a same QoS flow may have different features. For example, some PDU sets may not need high transmission quality. However, in a current mechanism, all PDU sets corresponding to a same QoS flow use a same set of PDU set QoS parameters. In this case, a waste of transmission resources may be caused.

In view of this, in embodiments of this application, a first network element may obtain first information. The first information may include a mapping relationship between a parameter indicating an attribute of a PDU set and transmission requirement information. In the first information, different parameters may correspond to same transmission requirement information, or may correspond to different transmission requirement information. This is equivalent to that different PDU set QoS parameters may be set for different PDU sets. For example, for a PDU set having a transmission quality requirement that is not high, a waste of transmission resources can be reduced by using a PDU set QoS parameter that is set for the PDU set; and for a PDU set having a high transmission quality requirement, transmission quality can be ensured by using a PDU set QoS parameter that is set for the PDU set. In this way, different PDU sets can be separately controlled, to improve control accuracy and transmission flexibility, so that the transmission quality can be ensured, and the waste of transmission resources can be reduced.

The technical solutions provided in this application may be applied to a 4th generation (4th generation, 4G) mobile communication technology system, for example, a long term evolution (long term evolution, LTE) system; may be applied to a 5G system, for example, an NR system; or may be applied to a next generation mobile communication system or another similar communication system, for example, a 6th generation (6th generation, 6G) mobile communication technology system. This is not specifically limited. The technical solutions provided in embodiments of this application may be further applied to a relay scenario in which remote (remote) UE is connected to a network via relay (relay) UE. The remote UE is, for example, a wearable device like a smartwatch, a smart band, or smart glasses. The relay UE is, for example, a device like a smartphone or a CPE.

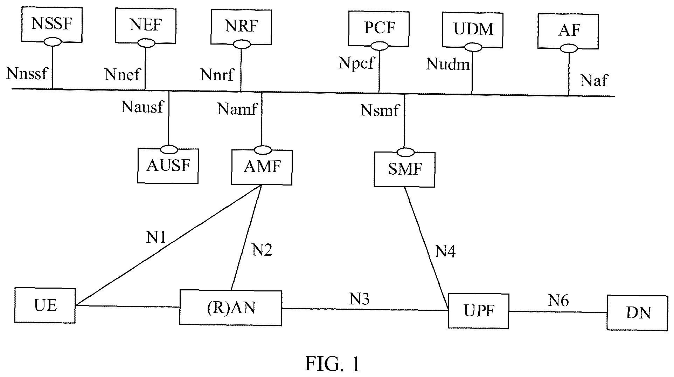

For example, FIG. 1 is a diagram of a 5G network architecture. As shown in FIG. 1, UE accesses a core network over a (R)AN, and the core network includes a user plane network element and a control plane network element. The user plane network element in the core network includes a UPF. The control plane network element in the core network includes at least one of network elements such as an authentication server function (authentication server function, AUSF), an AMF, an SMF, a network slice selection function (network slice selection function, NSSF), a network exposure function (network exposure function, NEF), a network function repository function (NF repository function, NRF), a unified data management (unified data management, UDM), a PCF, and an application function (application function, AF).

The user plane network element (for example, the UPF) is mainly responsible for packet data packet forwarding, quality of service (quality of service, QoS) control, charging information statistics collection, and the like. The control plane network element is mainly responsible for service procedure interaction, and delivering a data packet forwarding policy, a QoS control policy, and the like to a user plane.

A control plane of the core network may use a service-oriented architecture. In other words, interaction between control plane network elements is performed in a service invoking manner, to replace a point-to-point communication manner in a conventional architecture. In the service-oriented architecture, a control plane network element exposes a service to another control plane network element, so that the another control plane network element invokes the service. In point-to-point communication, a set of specific messages may exist in a communication interface between control plane network elements, and the messages can be used only by control plane network elements at two ends of the interface during communication.

Functions of the network elements in the core network are described as follows:
The UPF is responsible for user plane path management and data distribution, including UE IP address management, CN tunnel information management, traffic detection, user plane forwarding, charging, and the like. For example, the UPF may forward a user data packet according to a routing rule of the SMF, for example, send uplink data to a data network (data network, DN) or another UPF, and forward downlink data to another UPF or the (R)AN.

The AUSF performs security authentication on the UE.

The AMF performs UE access management and mobility management, and is responsible for status maintenance of the UE, reachability management of the UE, non-mobility management (mobility management, MM), forwarding of a non-access stratum (non-access stratum, NAS) message, and forwarding of a session management (session management, SM) N2 message.

The SMF performs UE session management, and allocates a resource or releases a resource for a session of the UE, where the resource includes session quality of service (quality of service, QoS), a session path, a forwarding rule, and the like.

The NSSF selects a network slice for the UE.

The NEF exposes a network function to a third party through a northbound application programming interface (application programming interface, API).

The NRF provides functions of storing and selecting network function entity information for another network element.

The UDM performs user subscription context management.

The PCF performs user policy management, and is configured to generate and manage user, session, and QoS flow processing policies.

The AF performs application management, is a server end that provides a type of service for a user, and therefore may also be referred to as an application server or a service server. The AF may be an AF deployed on an operator network, or may be a third-party AF. The AF can interact with the core network via the NEF, and can interact with a policy management framework to perform policy management.

Related interfaces between network element functions in embodiments of this application include the following interfaces.

N1 is an interface between the UE and the control plane of the core network.

N2 is a communication interface between an access network element and the control plane of the core network.

N3 is a communication interface between the access network element and the UPF, and is configured to perform transmission of user data.

N4 is a communication interface between the SMF and the UPF, and is configured to perform policy configuration and the like on the UPF.

N6 is a communication port between the UPF and the data network DN.

To better describe embodiments of this application, the following describes, with reference to the accompanying drawings, methods provided in embodiments of this application. Embodiments of this application relate to a first network element, a second network element, a third network element, a fourth network element, and the like. The methods provided in embodiments of this application may be applied to the network architecture shown in FIG. 1. The first network element in the methods provided in embodiments of this application may be the access network element in FIG. 1. For example, a network element in a (R)AN may be specifically a base station. The second network element in the methods provided in embodiments of this application may be the SMF in FIG. 1. The third network element in the methods provided in embodiments of this application may be the UPF in FIG. 1. The fourth network element in the methods provided in embodiments of this application may be the AF in FIG. 1. UE in the methods provided in embodiments of this application may be the UE in FIG. 1. In the following descriptions, an example in which the first network element is the access network element, the second network element is the SMF, the third network element is the UPF, and the fourth network element is the AF is used.

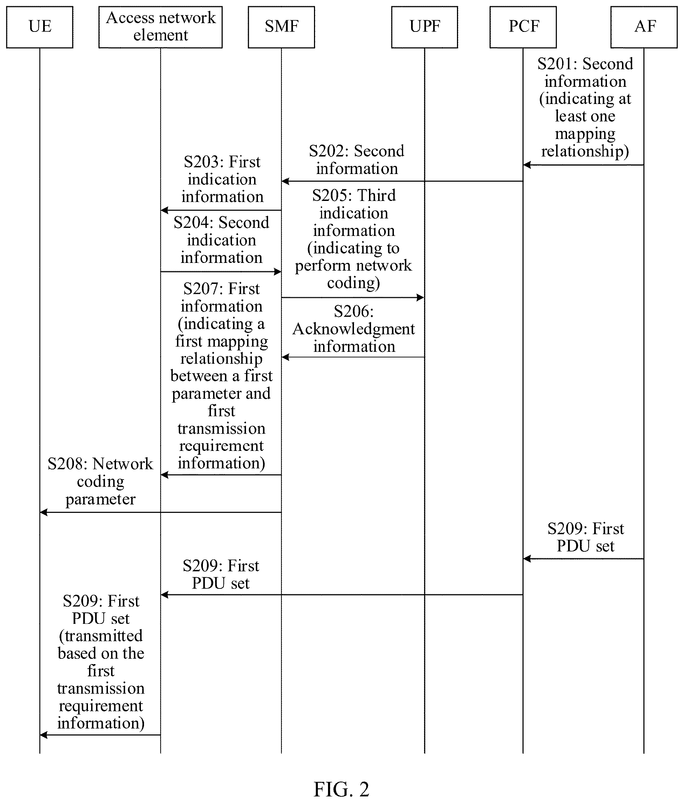

The following describes a first communication method according to an embodiment of this application. For example, FIG. 2 is a flowchart of a first communication method. In embodiments of this application, transmission requirement information may indicate a transmission requirement, a transmission guarantee requirement, a transmission QoS requirement, or the like. As shown in FIG. 2, the method includes the following steps.

S201: An AF sends a second message to a PCF. Correspondingly, the PCF receives the second message from the AF.

The second message may include second information. The second information may indicate (or include) at least one mapping relationship. Each mapping relationship may include a mapping relationship between a parameter A and transmission requirement information. The parameter A may indicate a first attribute of a PDU set. For example, the second information includes a mapping relationship between a parameter 1 and transmission requirement information A. In this case, the parameter A is the parameter 1, and the parameter 1 may indicate a first attribute of a PDU set A. A first attribute of a PDU set is, for example, importance of the PDU set, a priority of the PDU set, an index of the PDU set, or a type of a service frame corresponding to the PDU set.

Optionally, each mapping relationship may further include a parameter B. For example, each mapping relationship may include a mapping relationship between the parameter A, the parameter B, and transmission requirement information. The parameter B may indicate a second attribute of a PDU set. For example, a first attribute of a PDU set is importance of the PDU set, and a second attribute of the PDU set is a type of a service frame corresponding to the PDU set. For another example, a second attribute of a PDU set is importance of the PDU set, and a first attribute of the PDU set is a type of a service frame corresponding to the PDU set.

Alternatively, each mapping relationship may further include a mapping relationship between more parameters of a PDU set and transmission requirement information. This is not specifically limited.

In a mapping relationship, transmission requirement information included in the mapping relationship may indicate a percentage of a quantity of PDUs that need to be correctly transmitted in a PDU set corresponding to the mapping relationship in a total quantity of PDUs in the PDU set. The percentage is also referred to as an integrity transmission percentage. For example, if the second information includes the mapping relationship between the parameter 1 and the transmission requirement information A, and the parameter 1 indicates the first attribute of the PDU set A, the transmission requirement information A may indicate a percentage of a quantity A in a total quantity of PDUs included in the PDU set A. The quantity A is a quantity of PDUs that need to be correctly transmitted by an access network element during transmission of the PDU set A, the quantity A is a quantity of PDUs that are in the PDU set A and that need to be correctly received by UE, or the quantity A is a quantity of PDUs that are in the PDU set A and that need to be correctly received by the UE to correctly decode the PDU set A. For example, transmission requirement information may be implemented by using PSIHI. In this embodiment of this application, a function of the PSIHI is extended. The PSIHI may indicate a percentage of a quantity of PDUs that need to be correctly transmitted in a PDU set in a total quantity of PDUs in the PDU set. For example, if the percentage is 80%, it indicates that for a receive end (for example, the UE), provided that 80% of all the PDUs included in the PDU set are successfully received, the PDU set can be successfully decoded.

For example, refer to Table 1. The second information may include one or two mapping relationships in Table 1. In Table 1, an example in which a mapping relationship includes a mapping relationship between the parameter A and transmission requirement information, and a first attribute of a PDU set is importance of the PDU set is used.

**Table 1**

| Importance of a PDU set | 1 | 0 |
|---|---|---|
| Transmission requirement information | 100% | 80% |

Last two columns in Table 1 indicate two mapping relationships. For example, for a PDU set whose importance is "1", a percentage indicated by corresponding transmission requirement information is 100%; and for a PDU set whose importance is "0", a percentage indicated by corresponding transmission requirement information is 80%. The importance in Table 1 is marked by using a number. However, in this embodiment of this application, a grading granularity of the importance and a method for representing the importance are not limited.

Then, refer to Table 2. The second information may include one or two mapping relationships in Table 2. In Table 2, an example in which a mapping relationship includes a mapping relationship between the parameter A and transmission requirement information, and a first attribute of a PDU set is a type of a service frame corresponding to the PDU set is used.

**Table 2**

| Type of a service frame corresponding to a PDU set | I frame (intra-coded frame) | P frame (forward predictive-coded frame) |
|---|---|---|
| Transmission requirement information | 100% | 80% |

Last two columns in Table 2 indicate two mapping relationships. For example, for a PDU set corresponding to the I frame, a percentage indicated by corresponding transmission requirement information is 100%; and for a PDU set corresponding to the P frame, a percentage indicated by corresponding transmission requirement information is 80%.

The at least one mapping relationship included in the second information may correspond to at least one PDU set, and the at least one PDU set may belong to one or more QoS flows. In other words, in the at least one PDU set, different PDU sets may correspond to a same QoS flow, or may correspond to different QoS flows. This is equivalent to that in this embodiment of this application, different PDU set QoS parameters may be set for different PDU sets. PDU sets corresponding to a same QoS flow do not need to use a same set of PDU set QoS parameters, to improve control accuracy of a PDU set and transmission flexibility, so that transmission quality can be ensured, and a waste of transmission resources can be reduced.

For example, the AF may send first information to the PCF to request a QoS requirement for a corresponding service. Optionally, the second information may further include a PDU set QoS parameter. For example, the second information may include a PDU set QoS parameter of the PDU set corresponding to the at least one mapping relationship. Any PDU set QoS parameter may include a PSDB, a PSER, and the like.

The second information is included in the second message. The second message is, for example, a policy authorization create request message, an AF session create request message (AF session with QoS create request), or an AF session update request message (AF session with QoS create update). If the AF can directly interact with the PCF, the AF may directly send the second message to the PCF; or if the AF cannot directly interact with the PCF, the AF may send the second message to a NEF, and then the NEF sends the second message to the PCF.

S202: The PCF sends the second information to an SMF. Correspondingly, the SMF receives the second information from the PCF.

For example, the PCF may send a policy control and charging (policy control and charging, PCC) rule (rule) to the SMF, and the second information may be included in the PCC rule. Optionally, if the second information further includes a PDU set QoS parameter, the PDU set QoS parameter may also be included in the PCC rule.

Optionally, the PCF may send the PCC rule to the SMF through a PCF initiated session management policy association modification (PCF initiated SM policy association modification) procedure. For example, the PCF may send an Npcf_session management policy control (SMPolicyControl)_update notify (UpdateNotify) request (request) message to the SMF, where the message may include the PCC rule. Alternatively, the PCF may send the PCC rule to the SMF through a session management policy association modification establishment (SM Policy Association Modification Establishment) procedure. For example, the SMF may send Npcf_SMPolicyControl_create (Create) to the PCF, and the PCF may send an Npcf_SMPolicyControl_create response (CreateResponse) to the SMF. The Npcf_SMPolicyControl_CreateResponse may include the PCC rule.

The SMF obtains the second information through S201 and S202. Alternatively, the SMF may obtain the second information in another manner. For example, the SMF autonomously determines the second information. Therefore, S201 and S202 are optional steps.

S203: The SMF sends first indication information to the access network element. Correspondingly, the access network element receives the first indication information from the SMF.

The first indication information may also be referred to as a PSIHI notification indication (notification indication), or may be referred to as another name. For example, the SMF may directly send the first indication information to the access network element, or the SMF may send the first indication information to the access network element via the AMF. If the SMF sends the first indication information to the access network element via the AMF, the first indication information may be included in a QoS profile (profile), and the QoS profile may be sent to the access network element via an N2 session management container (SM container). Alternatively, the first indication information may not be included in a QoS profile, but is included as an independent parameter in an N2 SM container and sent to the access network element. Further, if the first indication information is included in the QoS profile, the first indication information may be an independent parameter in the QoS profile. For example, the first indication information is not included in PSIHI included in the QoS profile, or the first indication information may be included in the PSIHI included in the QoS profile.

For example, the first indication information is included in the information A. Optionally, the information A may further indicate at least one mapping relationship (for example, the at least one mapping relationship indicated by the second information), or indicate the transmission requirement information indicated by the second information.

The first indication information may indicate to notify the SMF when the access network element cannot guarantee an integrity transmission requirement indicated by the transmission requirement information. An integrity transmission requirement indicated by transmission requirement information is, for example, a percentage indicated by the transmission requirement information. That the access network element cannot guarantee a percentage indicated by transmission requirement information may include: Transmission of a PDU set by the access network element cannot satisfy a percentage indicated by transmission requirement information corresponding to the PDU set, transmission of a plurality of PDU sets by the access network element cannot satisfy percentages indicated by transmission requirement information corresponding to the plurality of PDU sets, or transmission that is of PDU sets whose quantity reaches a specific percentage and that is by the access network element cannot satisfy percentages indicated by transmission requirement information corresponding to these PDU sets. This may be specifically implemented by the access network element. Optionally, a PDU set for which the access network element cannot guarantee transmission requirement information is, for example, a PDU set corresponding to the second information.

Alternatively, the first indication information may indicate to notify the SMF when a quantity of PDU sets for which the access network element cannot guarantee transmission requirement information reaches a first threshold, where the first threshold includes, for example, a first percentage threshold or a first quantity threshold. For example, a percentage indicated by transmission requirement information is 100%. If the first percentage threshold is 20%, when the access network element determines that the percentage of 100% cannot be guaranteed for 20% of PDU sets (20% is a percentage of a quantity of PDU sets for which the percentage of 100% cannot be guaranteed in a total quantity of transmitted PDU sets), the access network element may notify the SMF; or if the first quantity threshold is 100, when the access network element determines that the percentage of 100% cannot be guaranteed for 100 PDU sets, the access network element may notify the SMF. Optionally, in this case, in addition to sending the first indication information to the access network element, the SMF may further send, to the access network element, a condition used for triggering the access network element to send a notification to the SMF. For example, the condition includes the first percentage threshold or the first quantity threshold. The first percentage threshold or the first quantity threshold may be included in the information A, or may be included in the first indication information. Alternatively, a condition (for example, the first percentage threshold or the first quantity threshold) used for triggering the access network element to send the notification to the SMF may be autonomously implemented by the access network element, and does not need to be sent by the SMF.

S204: The access network element sends second indication information to the SMF. Correspondingly, the SMF receives the second indication information from the access network element.

After receiving the first indication information, the access network element may determine whether transmission requirement information can be guaranteed. For example, if the information A further indicates the at least one mapping relationship, or indicates the transmission requirement information indicated by the second information, the access network element may determine whether transmission requirement information included in the at least one mapping relationship can be guaranteed. The at least one mapping relationship may correspond to at least one piece of transmission requirement information, and the access network element may separately determine whether the at least one piece of transmission requirement information can be guaranteed. For example, the access network element can guarantee all or none of the at least one piece of transmission requirement information, or the access network element can guarantee some of the at least one piece of transmission requirement information but cannot guarantee a remaining part of the at least one piece of transmission requirement information. The access network element may notify the SMF of this result by using the second indication information.

The second indication information may indicate that the access network element cannot guarantee transmission requirement information, indicate transmission requirement information that the access network element cannot guarantee and that is in the at least one mapping relationship, indicate that the access network element can guarantee transmission requirement information, or indicate transmission requirement information that the access network element can guarantee and that is in the at least one mapping relationship. If the second indication information indicates the transmission requirement information that the access network element can guarantee and that is in the at least one mapping relationship, the SMF may determine, based on the second information and the second indication information, the transmission requirement information that the access network element cannot guarantee and that is in the at least one mapping relationship. Optionally, if the second indication information indicates that the transmission requirement information can be guaranteed, it indicates that the access network element can guarantee all transmission requirement information included in the at least one mapping relationship. In this case, the second indication information may be implemented by using one bit. For example, a value of the bit is "1". Alternatively, if the second indication information indicates that the transmission requirement information cannot be guaranteed, it indicates that the access network element can guarantee no transmission requirement information included in the at least one mapping relationship. In this case, the second indication information may be implemented by using one bit. For example, a value of the bit is "0". Alternatively, if the second indication information indicates transmission requirement information that the access network element can guarantee or cannot guarantee and that is in the at least one mapping relationship, it indicates that the access network element can guarantee or cannot guarantee some transmission requirement information included in a second mapping relationship. The second indication information may include transmission requirement information that the access network element can guarantee or cannot guarantee, or include an index of a PDU set corresponding to the transmission requirement information that the access network element can guarantee or cannot guarantee.

Optionally, that the access network element cannot guarantee the transmission requirement information may be understood as that the access network element cannot guarantee a percentage indicated by the transmission requirement information. For example, if the access network element cannot guarantee any transmission requirement information in the transmission requirement information corresponding to the at least one mapping relationship, the access network element may send the second indication information; or if the access network element cannot guarantee PDU sets whose quantity is a first threshold in a PDU set corresponding to the at least one mapping relationship, the access network element may send the second indication information. The first threshold includes, for example, the first percentage threshold or the first quantity threshold, the first quantity threshold is a quantity threshold of PDU sets that the access network element cannot guarantee, and the first percentage threshold is a percentage threshold of PDU sets that the access network element cannot guarantee. For example, for the at least one PDU set corresponding to the at least one mapping relationship, a percentage of PDU sets that the access network element cannot guarantee is greater than or equal to the first percentage threshold. For another example, for the at least one PDU set corresponding to the at least one mapping relationship, a quantity of PDU sets that the access network element cannot guarantee is greater than or equal to the first quantity threshold. That the access network element cannot guarantee a PDU set means that a percentage indicated by transmission requirement information corresponding to the PDU set cannot be guaranteed. Optionally, the first threshold may be included in the first indication information, and is sent by the SMF to the access network element; or the first threshold may be autonomously determined by the access network element.

For example, the at least one mapping relationship includes a mapping relationship A and a mapping relationship B, the mapping relationship A is a mapping relationship between a PDU set A and the transmission requirement information A, and the mapping relationship B is a mapping relationship between a PDU set B and transmission requirement information B. For example, the first percentage threshold is 50%. In this case, if the access network element cannot guarantee the transmission requirement information A or the transmission requirement information B, the access network element may send the second indication information. For another example, the first percentage threshold is 100%. In this case, if the access network element cannot guarantee the transmission requirement information A and the transmission requirement information B, the access network element may send the second indication information; or if the access network element cannot guarantee the transmission requirement information A but can guarantee the transmission requirement information B, or cannot guarantee the transmission requirement information B but can guarantee the transmission requirement information A, the access network element may not need to send the second indication information.

Optionally, the second indication information may further include transmission requirement information expected by the access network element. In this embodiment of this application, the transmission requirement information expected by the access network element may be transmission requirement information that the access network element can guarantee, or transmission requirement information that the access network element can guarantee based on an index of a PDU set. For example, the second indication information may include a mapping relationship between the transmission requirement information expected by the access network element and the index of the PDU set. The at least one mapping relationship may correspond to the at least one PDU set, and the second indication information may include only one piece of transmission requirement information expected by the access network element. It may be understood as that the access network element expects to use the transmission requirement information regardless of a specific PDU set. Alternatively, the second indication information may include at least one piece of transmission requirement information expected by the access network element, and the at least one piece of transmission requirement information is in one-to-one correspondence with the at least one PDU set corresponding to the at least one mapping relationship. The transmission requirement information expected by the access network element is determined, for example, based on a factor like performance of the access network element or a network status. For example, if a percentage indicated by one piece of transmission requirement information included in the at least one mapping relationship is 100%, and the access network element determines, based on a factor like an available resource in a network, that it can only be guaranteed that 90% of PDUs in a PDU set can be correctly transmitted, a percentage indicated by the transmission requirement information expected by the access network element may be less than or equal to 90%.

S205: The SMF sends third indication information to a UPF. Correspondingly, the UPF receives the third indication information from the SMF. The third indication information may indicate the UPF to perform network coding. The third indication information may also be referred to as a PDU set NC indication, or may be referred to as another name.

For example, the SMF may determine, based on the second indication information, whether the access network element has transmission requirement information that cannot be guaranteed. If the access network element has transmission requirement information that cannot be guaranteed, the SMF may indicate the UPF to perform network coding. Alternatively, if the access network element does not have transmission requirement information that cannot be guaranteed, the SMF may not need to indicate the UPF to perform network coding. Therefore, S205 is an optional step. The network coding is a method for improving a transmission accuracy rate. A basic principle of the network coding is as follows: A transmit end may obtain M pieces of check data through calculation for K pieces of to-be-transmitted original data, and separately send K+M pieces of data over a network, so that a receive end can tolerate a transmission error in any M pieces of data. For the receive end, all original data can be obtained through calculation provided that any K pieces of data are correctly transmitted. For a QoS flow that supports PDU set QoS processing, the access network element performs PDU set-based QoS control on a Uu interface based on a PDU set QoS parameter. If a percentage indicated by transmission requirement information corresponding to a PDU set is 100%, the access network element needs to guarantee that each PDU in the PDU set can be correctly transmitted. A transmission error of any PDU leads to a result that the entire PDU set cannot be decoded. Therefore, a requirement on transmission quality of an air interface is extremely high. However, the UPF may add a redundant PDU in a network coding manner, so that a percentage of PDUs that should be correctly transmitted can be reduced. In other words, in this embodiment of this application, the network coding may be considered, and an integrity transmission percentage of a PDU set can be reduced through network coding, to reduce the requirement on the transmission quality, so that the transmission quality can be guaranteed and a waste of transmission resources can be reduced.

Optionally, the third indication information may further indicate at least one mapping relationship (for example, the at least one mapping relationship indicated by the second information), or indicate a PDU set corresponding to the at least one mapping relationship (for example, including a parameter that is included in the at least one mapping relationship and that indicates a first attribute of the PDU set), so that the UPF can determine a PDU that is in a specific PDU set and on which network coding should be performed. For example, if the access network element can guarantee no transmission requirement information included in the at least one mapping relationship, the third indication information may indicate the at least one mapping relationship; or if the access network element cannot guarantee some transmission requirement information included in the at least one mapping relationship, the third indication information may indicate a PDU set corresponding to the transmission requirement information that the access network element cannot guarantee. For example, if the parameter included in the third indication information indicates that the first attribute of the PDU set is importance of the PDU set, and a value of the parameter in the third indication information is "1", the UPF may perform network coding on all PDU sets whose importance information is "1".

Optionally, the third indication information may further include a parameter for performing network coding on a PDU set (which may be referred to as a network coding parameter for short), and the network coding parameter includes, for example, a network coding scheme or a network coding check percentage. The network coding check percentage may also be referred to as a network coding redundancy rate, and may indicate a percentage of check PDUs added in the PDU set in comparison with original PDUs. For example, if a PDU set includes K original PDUs, and the network coding check percentage is X%, a quantity of check PDUs added after network coding is K×X%, and a total quantity of PDUs after the network coding is K×(1+X%).

The third indication information may be included in an N4 session establishment/modification request (N4 session establishment/modification request), may be included in another message sent by the SMF to the UPF, or may be included in a message that is newly defined in this embodiment of this application and that indicates network coding.

Alternatively, in this embodiment of this application, network coding may not be considered. In this case, S205 does not need to be performed.

S206: The UPF sends acknowledgment information to the SMF. Correspondingly, the SMF receives the acknowledgment information from the UPF. The acknowledgment information may be used to acknowledge to perform network coding on a PDU set, or the acknowledgment information includes a network coding parameter.

The SMF may send the network coding parameter to the UPF in S205. In this case, the UPF may use the network coding parameter indicated by the SMF, and the acknowledgment information may no longer include a network coding parameter. Alternatively, the SMF may not send a network coding parameter to the UPF. In this case, the UPF may autonomously determine a network coding parameter. For example, the UPF determines the network coding parameter based on a factor like performance of the UPF or a network status. Alternatively, in S205, the SMF may send a part of network coding parameters to the UPF, for example, send a network coding scheme. The UPF may further autonomously determine another network coding parameter, for example, determine a network coding check percentage. If the UPF autonomously determines a part or all of network coding parameters, optionally, the UPF may send, to the SMF by using the acknowledgment information, the network coding parameter determined by the UPF. For content included in the network coding parameter, refer to the foregoing descriptions.

The acknowledgment information may be included in an N4 session establishment/modification response (N4 session establishment/modification response), included in another message sent by the UPF to the SMF, or included in a message newly defined in this embodiment of this application.

If the SMF does not send the third indication information to the UPF, or network coding is not considered in this embodiment of this application, S206 does not need to be performed. Therefore, S206 is an optional step.

S207: The SMF sends first information to the access network element. Correspondingly, the access network element receives the first information from the SMF.

The first information may indicate (or include) at least one mapping relationship. Each mapping relationship may include a mapping relationship between a parameter A and transmission requirement information. The parameter A may indicate a first attribute of a PDU set. Alternatively, each mapping relationship may include a mapping relationship between the parameter A, a parameter B, and transmission requirement information. The parameter A may indicate a first attribute of a PDU set, and the parameter B may indicate a second attribute of a PDU set. A quantity of mapping relationships included in the first information may be the same as or different from a quantity of mapping relationships included in the second information. For example, a mapping relationship indicated by the first information is a first mapping relationship, and the first mapping relationship is a mapping relationship between a first parameter and first transmission requirement information, or a mapping relationship between the first parameter, a second parameter, and the first transmission requirement information. A parameter A in the first mapping relationship is the first parameter, and the first parameter may indicate a first attribute of a first PDU set. A parameter B in the first mapping relationship is the second parameter, and the second parameter may indicate a second attribute of the first PDU set. The first transmission requirement information may indicate a percentage of a first quantity in a total quantity of PDUs included in the first PDU set. The first quantity may be a quantity of PDUs that need to be correctly transmitted by the access network element during transmission of the first PDU set, a quantity of PDUs that need to be correctly received by the UE in the first PDU set, or a quantity of PDUs that need to be correctly received by the UE in the first PDU set to correctly decode the first PDU set.

For example, the first mapping relationship is the mapping relationship between the first parameter and the first transmission requirement information. When the first parameter is a first value, the first transmission requirement information indicates a first percentage; or when the first parameter is a second value, the first transmission requirement information indicates a second percentage. For example, the first attribute of the first PDU set is importance of the first PDU set. Table 1 is used as an example. When a value of the importance of the first PDU set is "1", the percentage indicated by the first transmission requirement information is 100%. When a value of the importance of the first PDU set is "0", the percentage indicated by the first transmission requirement information is 80%.

For another example, the first mapping relationship is the mapping relationship between the first parameter and the first transmission requirement information. When the first parameter indicates a first type, the first transmission requirement information indicates a first percentage; or when the first parameter indicates a second type, the first transmission requirement information indicates a second percentage. For example, the first attribute of the first PDU set is a type of a service frame corresponding to the first PDU set. Table 2 is used as an example. When the type of the service frame corresponding to the first PDU set is the "I frame", the percentage indicated by the first transmission requirement information is 100%. When the type of the service frame corresponding to the first PDU set is the "P frame", the percentage indicated by the first transmission requirement information is 80%.

For another example, the first mapping relationship is the mapping relationship between the first parameter, the second parameter, and the first transmission requirement information. When the first parameter is a first value and the second parameter is a third value, the first transmission requirement information indicates a first percentage; or when the first parameter is a second value and the second parameter is a fourth value, the first transmission requirement information indicates a second percentage. In addition, the first parameter and the second parameter may alternatively have another value combination. In this case, the first transmission requirement information may alternatively indicate another percentage. Details are not described.

A value of a parameter may be a value, or may be other information. For example, if the first attribute indicated by the parameter A is importance, a value of the parameter A may be a value of the importance. For another example, if the second attribute indicated by the parameter B is a type of a service frame, a value of the parameter B may be a type of the service frame. For example, if the first attribute indicated by the first parameter is importance, a value of the first parameter is the first value, and a value of the importance may be the first value. For another example, if the first attribute indicated by the first parameter is a type of a service frame, a value of the first parameter is the first value, and the type of the service frame may be a type (for example, an I frame or a P frame). In addition, in this case, the value of the first parameter may also be described as the type indicated by the first parameter.

Optionally, if S203 to S206 are not performed, the second information may be used as the first information.

Alternatively, if S205 and S206 are performed but S203 and S204 are not performed, the first information may be determined based on the second information and the network coding parameter. For example, the SMF may determine, based on a percentage indicated by transmission requirement information indicated by the second information and the network coding check percentage included in the network coding parameter, a percentage indicated by transmission requirement information indicated by the first information. This is equivalent to that the SMF may update transmission requirement information corresponding to a PDU set. The SMF determines, based on the percentage indicated by the transmission requirement information indicated by the second information and the network coding check percentage included in the network coding parameter, the percentage indicated by the transmission requirement information indicated by the first information. For example, in a determining manner, for transmission requirement information that is indicated by the first information and the second information and that corresponds to a same PDU set, the SMF determines that the percentage indicated by the transmission requirement information indicated by the first information may be greater than or equal to a difference between the percentage indicated by the transmission requirement information indicated by the second information and the network coding check percentage included in the network coding parameter. For example, if the second information indicates a mapping relationship between the transmission requirement information A and the PDU set A, a percentage indicated by the transmission requirement information A is 100%, the network coding check percentage is 20%, and the first information indicates a mapping relationship between the transmission requirement information B and the PDU set A, a percentage indicated by the transmission requirement information B may be greater than or equal to 80%.

Alternatively, if S203 to S206 are performed, the first information may be determined based on the second information and the network coding parameter, and the network coding parameter may be determined based on the second indication information from the access network element. For example, if the SMF determines, based on the second indication information, transmission requirement information that the access network element cannot guarantee, the SMF may determine the network coding parameter accordingly, or the UPF may determine the network coding parameter. After receiving the acknowledgment information from the UPF, the SMF determines the first information based on the network coding parameter and the transmission requirement information that the access network element cannot guarantee. If transmission requirement information included in some mapping relationships indicated by the second information is transmission requirement information that the access network element can guarantee, the first information may continue to include the mapping relationships. If transmission requirement information included in some mapping relationships indicated by the second information is transmission requirement information that the access network element cannot guarantee, the SMF may update the transmission requirement information based on the network coding parameter, the first information may include the mapping relationships, and transmission requirement information in the mapping relationships is updated transmission requirement information. For example, the second information is shown in Table 1. The access network element cannot guarantee transmission requirement information corresponding to the importance "1" in the second information, but can guarantee transmission requirement information corresponding to the importance "0" in the second information. In this case, the SMF may indicate the UPF to perform network coding on a PDU set corresponding to the transmission requirement information "1", and the UPF may determine the network coding parameter and notify the SMF of the network coding parameter. The SMF may determine a new percentage based on the network coding parameter and an integrity transmission percentage "100%". For example, the new percentage is 90%. The first information may continue to include a mapping relationship between the importance "1" and 100%, and further include a mapping relationship between the importance "0" and 90%. Optionally, if the access network element indicates, by using the second indication information, the transmission requirement information expected by the access network element, when determining new transmission requirement information or the network coding parameter, the SMF may further consider the transmission requirement information expected by the access network element. This is not limited herein.

In addition, optionally, the method further includes S208. The SMF may further send the network coding parameter to the UE, so that the UE decodes a PDU. After receiving the network coding parameter, the UE may decode a PDU in a received PDU set (for example, a PDU set corresponding to the first information, for example, the first PDU set) based on the network coding parameter.

For example, the SMF may send an N1 message and an N2 message to the AMF. The N1 message may be transparently transmitted by the AMF and the access network element to the UE. The N1 message is, for example, an N1 SM container. The N1 SM container is, for example, a PDU session modification command/PDU session establishment accept (PDU session modification command/PDU session establishment accept). The PDU session modification command or PDU session establishment accept message may include information indicating network coding and the network coding check percentage. The N2 message may be transparently transmitted by the AMF to the access network element. The N2 message is, for example, N2 SM information. The first information may be included in the N2 SM information as an independent parameter. For example, the first information is not included in a QoS profile included in the N2 SM information, or the first information may be included in the QoS profile included in the N2 SM information. If the first information is included in the QoS profile, the first information may be included in the QoS profile as an independent parameter. For example, the first information is not included in PSIHI included in the QoS profile, or the first information may be included in the PSIHI included in the QoS profile. For example, the QoS profile includes a PDU set QoS parameter, and the PSIHI may be included in the PDU set QoS parameter. For example, the SMF may send the N1 message and the N2 message to the AMF by using Namf_communication (Communication)_N1N2 information transfer (N1N2MessageTransfer), in other words, the Namf_Communication_N1N2MessageTransfer message may include the N2 SM information and the N1 SM container.

Optionally, in addition to sending the first information to the access network element, the SMF may further send, to the access network element, a PDU set QoS parameter or PDU set information of a PDU set corresponding to the first information. This is not limited herein.

Optionally, in addition to sending the first information to the access network element, the SMF may further send the first indication information to the access network element. For example, the first message may include the first information and the first indication information. Optionally, the first message may further include information such as the PDU set QoS parameter or the PDU set information of the PDU set corresponding to the first information. The first indication information may indicate to notify the SMF when the access network element cannot guarantee a percentage indicated by transmission requirement information. In other words, although the SMF has adjusted corresponding transmission requirement information, the access network element may still fail to guarantee some or all transmission requirement information indicated by the first message. Therefore, the SMF may continue to send the first indication information to the access network element. For a transmission manner, indicated content, and the like of the first indication information, refer to the descriptions of S203.

S209: The access network element transmits the first PDU set based on the first transmission requirement information.

As described above, the first information may include the at least one mapping relationship, and the access network element may transmit a corresponding PDU set based on transmission requirement information included in the at least one mapping relationship. For example, the first mapping relationship includes the mapping relationship between the first parameter corresponding to the first PDU set and the first transmission requirement information. Therefore, the access network element may transmit the first PDU set based on the first transmission requirement information.

For example, if S205 and S206 are performed, when the UPF receives a downlink PDU, the UPF performs network coding on PDUs in a same PDU set based on the network coding check percentage, to add a check PDU, and add corresponding information of the PDU set to general packet radio service (general packet radio service, GPRS) tunneling protocol (GPRS tunneling protocol, GTP)-user plane (user plane, U) packet headers of an original PDU and the check PDU. The corresponding information of the PDU set includes, for example, a quantity of PDUs included in the PDU set, includes information indicating a first attribute or a second attribute of the PDU set, or the like. The corresponding information of the PDU set may be determined based on a PDU set after the network coding. The UPF may perform network coding on a corresponding PDU set based on the indication of the SMF in S205. For example, the UPF may perform network coding on PDU sets having some indexes, or the UPF may perform network coding on PDU sets having some types of importance or corresponding to some types of service frames. After receiving a PDU, the access network element may parse a GTP-U packet header included in the PDU, and may determine, based on the first information and information that is included in the GTU-U packet header and that indicates a first attribute or a second attribute of the PDU set, transmission requirement information corresponding to the PDU set, to transmit the PDU set based on the transmission requirement information. For example, for the PDU set, the access network element can ensure correct transmission of the PDU set provided that it is guaranteed that a percentage of a quantity of PDUs correctly transmitted in the PDU set in a total quantity of PDUs in the PDU set is greater than or equal to a percentage indicated by the transmission requirement information. For the UE, it can be ensured that the PDU set is correctly decoded provided that it is guaranteed that a percentage of a quantity of PDUs correctly received in the PDU set in the total quantity of PDUs in the PDU set is greater than or equal to the percentage indicated by the transmission requirement information. The UE may decode the received PDU based on the network coding parameter, and transfer data obtained through decoding to an application layer of the UE.

If the SMF sends only the first information to the access network element but does not send the first indication information, the access network element may perform S209; if the SMF sends the first indication information but the access network element does not have transmission requirement information that cannot be guaranteed, the access network element may perform S209; if the SMF sends the first indication information and the access network element cannot guarantee some transmission requirement information indicated by the first information, the access network element may perform S209, where the first transmission requirement information is transmission requirement information that the access network element can guarantee and that is in transmission requirement information indicated by the first information; or if the SMF sends the first indication information and the access network element can guarantee no transmission requirement information indicated by the first information, the access network element may not perform S209.

For a processing manner after the access network element receives the first indication information, refer to S204. The "second information" in S204 may be replaced with the "first information". If the second indication information indicates that the access network element has transmission requirement information that cannot be guaranteed, S205 and S206 may continue to be performed. Through S205 and S206, the SMF may determine new information, for example, third information. The third information may indicate a new mapping relationship. The SMF may send the third information to the access network element. For a manner of determining the third information, refer to the foregoing manner of determining the first information. If the access network element can guarantee no transmission requirement information in the first information, the access network element may perform S209 after receiving the third information. In this case, the first mapping relationship may be any mapping relationship indicated by the third information. Alternatively, if the access network element cannot guarantee some transmission requirement information indicated by the first information, the access network element may perform S209 before receiving the third information. The first mapping relationship may be any mapping relationship included in the first information. After receiving the third information, the access network element may perform transmission based on transmission requirement information indicated by the third information. The third information may continue to include the transmission requirement information that the access network element can guarantee and that is in the transmission requirement information indicated by the first information. Therefore, replacement of a mapping relationship does not affect the transmission by the access network element.

Optionally, in addition to sending the third information to the access network element, the SMF may further continue to send the first indication information to the access network element, so that the access network element may further continue to perform reporting if the access network element has transmission requirement information that cannot be guaranteed. This is not limited herein.

It has been stated in the foregoing that, to reduce the requirement on the transmission quality of the air interface, in this embodiment of this application, a manner of indicating the UPF to perform network coding may be used. In addition, another manner may alternatively be used, in other words, S205 and S206 may alternatively be replaced with the following process. For example, if the SMF determines, based on the second indication information from the access network element, that the access network element has transmission requirement information that cannot be guaranteed, or the SMF autonomously determines that the access network element has transmission requirement information that cannot be guaranteed, the SMF may not need to indicate the UPF to perform network coding, but may send a third message to the AF. The third message may indicate that the access network element cannot guarantee the transmission requirement information, or indicate transmission requirement information that the access network element cannot guarantee and that is in the second information.

After receiving the third message, the AF may perform application layer adjustment. For example, the AF performs a processing process like network coding, reducing a frame rate, reducing a coding speed, or reducing a resolution. In addition, the AF may further send (for a sending manner, refer to the descriptions of S201), to the SMF, information indicating an updated mapping relationship, for example, referred to as fifth information. The fifth information may be obtained by adjusting the second information, or may be information obtained based on a redetermined mapping relationship. The fifth information also indicates at least one mapping relationship. After receiving the fifth information, the SMF may perform S207. Optionally, in addition to sending the fifth information to the access network element, the SMF may further send the first indication information to the access network element. After receiving the first indication information, if transmission requirement information indicated by the fifth information includes transmission requirement information that the access network element cannot guarantee, the access network element may notify the SMF. In this case, the SMF may send a message to the AF again, and the AF performs adjustment again. For example, the AF obtains, through adjustment, new information, referred to as fourth information. The AF may send the fourth information to the SMF, and then the SMF sends the fourth information to the access network element. The rest may be deduced by analogy. The fourth information also indicates at least one mapping relationship. For example, one mapping relationship indicated by the fourth information is a second mapping relationship, the second mapping relationship is a mapping relationship between the first parameter and second transmission requirement information, and the first parameter indicates the first attribute of the first PDU set. Optionally, a percentage indicated by the second transmission requirement information may be less than the percentage indicated by the first transmission requirement information. In other words, the AF adjusts percentages of a same PDU set, so that the access network element can support a reduced percentage, and the requirement on the transmission quality of the air interface is also reduced. Alternatively, a percentage indicated by the second transmission requirement information may be greater than or equal to the percentage indicated by the first transmission requirement information. This may be specifically implemented by the AF.

In this embodiment of this application, the access network element may obtain the first information. The first information may include a mapping relationship between a parameter indicating an attribute of a PDU set and transmission requirement information. In the first information, different parameters may correspond to same transmission requirement information, or may correspond to different transmission requirement information. This is equivalent to that different PDU set QoS parameters may be set for different PDU sets. For example, for a PDU set having a transmission quality requirement that is not high, a waste of transmission resources can be reduced by using a PDU set QoS parameter that is set for the PDU set; and for a PDU set having a high transmission quality requirement, transmission quality can be ensured by using a PDU set QoS parameter that is set for the PDU set. In this way, different PDU sets can be separately controlled, to improve control accuracy and transmission flexibility, so that the transmission quality can be ensured, and the waste of transmission resources can be reduced.

In this embodiment of this application, the access network element may notify the SMF whether transmission requirement information that cannot be guaranteed exists, so that adjustment by the SMF is more targeted.

In this embodiment of this application, a network coding process may be further introduced. For example, a network element like the UPF or the AF may perform network coding, and the integrity transmission percentage may be reduced by adding a check PDU. In this way, the requirement on the transmission quality of the air interface is reduced.

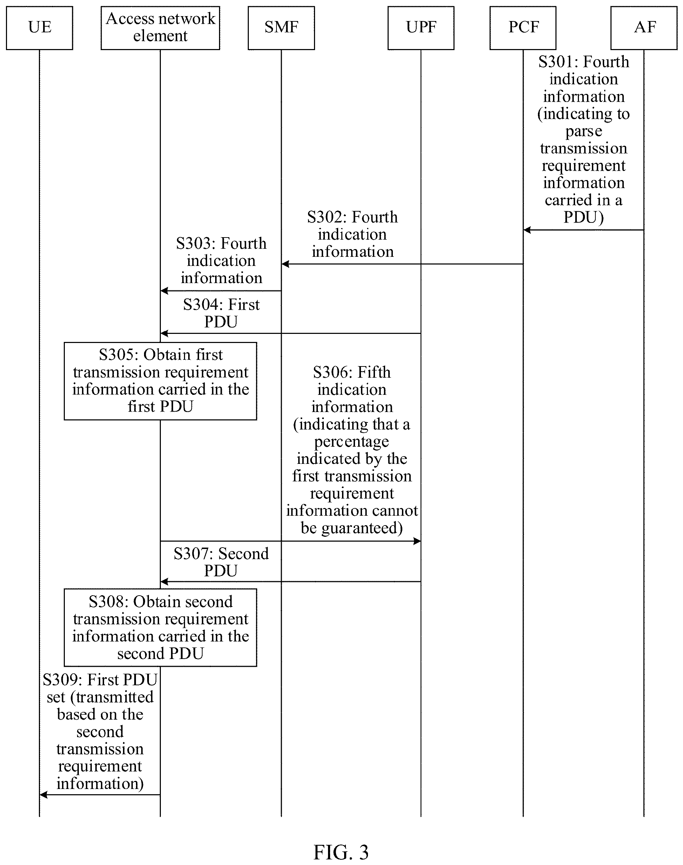

The following describes a second communication method according to an embodiment of this application. FIG. 3 is a flowchart of the method.

S301: An AF sends fourth indication information to a PCF. Correspondingly, the PCF receives the fourth indication information from the AF. The fourth indication information may indicate to parse transmission requirement information carried in a PDU set, indicate to parse transmission requirement information included in a PDU set from a UPF, or indicate that a PDU set includes corresponding transmission requirement information. For explanations of the transmission requirement information, refer to the embodiment shown in FIG. 2. For example, the PDU set sent by the UPF may include the transmission requirement information. If an access network element receives the PDU set from the UPF, the access network element may parse the transmission requirement information included in the PDU set. The fourth indication information may also be referred to as a dynamic PSIHI indication, or may be referred to as another name.

For example, the AF may send a second message to the PCF, where the fourth indication information may be included in the second message, and the second message may be used to request a QoS requirement for a corresponding service. Optionally, the second message may further include a PDU set QoS parameter. For example, the second message may include a PDU set QoS parameter of one or more PDU sets. Any PDU set QoS parameter may include one or more of parameters such as a PSDB, PSIHI, or a PSER. For content such as an implementation of the second message, refer to S201 in the embodiment shown in FIG. 2.

S302: The PCF sends the fourth indication information to an SMF. Correspondingly, the SMF receives the fourth indication information from the PCF.

For example, the PCF may send a PCC rule to the SMF, and the fourth indication information may be included in the PCC rule. Optionally, if the second message further includes the PDU set QoS parameter, the PDU set QoS parameter may also be included in the PCC rule. For a manner of sending the PCC rule, refer to S202 in the embodiment shown in FIG. 2.

The SMF obtains the fourth indication information through S301 and S302. Alternatively, the SMF may obtain the fourth indication information in another manner. For example, the SMF autonomously determines the fourth indication information. Therefore, S301 and S302 are optional steps.

S303: The SMF sends the fourth indication information to the access network element. Correspondingly, the access network element receives the fourth indication information from the SMF. For explanations of the fourth indication information, refer to S301. For a manner in which the SMF sends the fourth indication information to the access network element, refer to the descriptions of the manner in which the SMF sends the first information to the access network element in S207 in the embodiment shown in FIG. 2.

S304: The UPF sends a first PDU to the access network element. Correspondingly, the access network element receives the first PDU from the UPF. In other words, the access network element starts to perform transmission. For example, the first PDU belongs to a first PDU set.

The UPF may add, to a GTP-U packet header of a PDU included in the first PDU set, transmission requirement information corresponding to the first PDU set, and then send, to the access network element, the PDU to which the transmission requirement information is added. The UPF may directly obtain the transmission requirement information corresponding to the first PDU set from a data packet from the AF. For example, when sending the PDU included in the first PDU set to the UPF, the AF may also send the transmission requirement information corresponding to the first PDU set. Alternatively, the UPF may autonomously determine the transmission requirement information corresponding to the first PDU set.

Optionally, before S304, the SMF may send, to the UPF, indication information, for example, referred to as sixth indication information. The sixth indication information may indicate the UPF to add, when sending a PDU to the access network element, transmission requirement information of a corresponding PDU set to a GTP-U packet header. After receiving the sixth indication information, the UPF can determine to add, to the GTP-U packet header, the transmission requirement information corresponding to the PDU set.

S305: The access network element obtains transmission requirement information carried in the first PDU, for example, first transmission requirement information. For explanations of the first transmission requirement information, refer to the embodiment shown in FIG. 2.

The access network element learns, based on the fourth indication information, that a GTU-U packet header of the first PDU needs to be parsed, to obtain the transmission requirement information carried in the first PDU. Therefore, after receiving the first PDU, the access network element may obtain the transmission requirement information, for example, the first transmission requirement information, by parsing the GTP-U packet header of the first PDU. The first transmission requirement information is transmission requirement information that needs to be guaranteed for the first PDU set. For the UPF, for example, the first transmission requirement information is from the AF, in other words, the AF indicates the UPF to use the first transmission requirement information for the first PDU set; or the UPF may determine the first transmission requirement information based on information about the UPF. Next, the access network element may transmit the first PDU set based on the first transmission requirement information.

Alternatively, after obtaining the first transmission requirement information, the access network element may further determine whether a percentage indicated by the first transmission requirement information can be guaranteed. If the access network element can guarantee the percentage, the access network element may transmit the first PDU set based on the first transmission requirement information; or if the access network element cannot guarantee the percentage, the access network element may notify a corresponding network element, so that the corresponding network element can adjust the first transmission requirement information.

In an optional implementation, if the access network element cannot guarantee the percentage, the method further includes S306. The access network element may send fifth indication information to the UPF or the SMF, where the fifth indication information may indicate that the access network element cannot guarantee the percentage indicated by the first transmission requirement information. Optionally, the fifth indication information may further include transmission requirement information expected by the access network element.

For example, if the access network element sends the fifth indication information to the UPF, after receiving the fifth indication information, the UPF may adjust the first transmission requirement information in a corresponding manner. For example, a manner that can be used by the UPF includes: The UPF performs network coding on the first PDU set, so that an integrity transmission percentage can be reduced through network coding. The UPF may autonomously determine a network coding parameter, and perform network coding on the first PDU set based on the network coding parameter. For the network coding parameter, refer to related descriptions of the embodiment shown in FIG. 2. The UPF may determine new transmission requirement information, for example, referred to as second transmission requirement information, based on the first transmission requirement information and the network coding parameter. For example, the UPF may determine, based on the percentage indicated by the first transmission requirement information and a network coding check percentage included in the network coding parameter, a percentage indicated by the second transmission requirement information. For this process, refer to the descriptions of the embodiment shown in FIG. 2. Optionally, the percentage indicated by the second transmission requirement information may be less than the percentage indicated by the first transmission requirement information, to reduce a requirement on transmission quality of an air interface. However, this is not limited thereto. For example, the percentage indicated by the second transmission requirement information may alternatively be greater than or equal to the percentage indicated by the first transmission requirement information. This may depend on implementation of the UPF.

For another example, if the access network element sends the fifth indication information to the SMF, after receiving the fifth indication information, the SMF may adjust the first transmission requirement information in a corresponding manner. For example, a manner that can be used by the SMF includes: The SMF sends third indication information to the UPF, where the third indication information may indicate the UPF to perform network coding. Optionally, the third indication information may further include the first transmission requirement information. Optionally, the third indication information may further include a part of or all of a network coding parameter. For more descriptions of this step, refer to S205 in the embodiment shown in FIG. 2. After receiving the third indication information, the UPF may send acknowledgment information to the SMF, to acknowledge to perform network coding, for example, acknowledge to perform network coding on the first PDU set. Optionally, the acknowledgment information may further include a part or all of the network coding parameter. For more descriptions of this step, refer to S206 in the embodiment shown in FIG. 2. The SMF may determine new transmission requirement information, for example, second transmission requirement information, based on the first transmission requirement information and the network coding parameter, and may send the second transmission requirement information to the UPF, so that the UPF can include the second transmission requirement information in a PDU in the first PDU set. Alternatively, after receiving the third indication information, the UPF may autonomously determine the second transmission requirement information, and the second transmission requirement information does not need to be determined by the SMF. For a process in which the SMF or the UPF determines the second transmission requirement information, refer to the embodiment shown in FIG. 2.

Alternatively, if the access network element sends the fifth indication information to the SMF, another manner that can be used by the SMF to adjust the first transmission requirement information includes: The SMF sends a third message to the AF, where the third message may indicate that the access network element cannot guarantee transmission requirement information, for example, it indicates that the access network element cannot guarantee the first transmission requirement information. After receiving the third message, the AF may perform application layer adjustment. For example, the AF performs a processing process like network coding, reducing a frame rate, reducing a coding speed, or reducing a resolution. For example, the AF may determine new transmission requirement information, for example, second transmission requirement information. The AF may send the second transmission requirement information to the SMF, and then the SMF sends the second transmission requirement information to the UPF. Alternatively, the AF may directly send the second transmission requirement information to the UPF, so that the UPF can include the second transmission requirement information in a PDU in the first PDU set.

If the UPF obtains the second transmission requirement information, the method may further include S307 to S309. S307 includes: The UPF sends a second PDU to the access network element, and the access network element may receive the second PDU. The second PDU belongs to the first PDU set. The UPF may add the second transmission requirement information to a GTU-U packet header of the second PDU, but does not add the first transmission requirement information. In addition, the UPF sends, to the access network element, a second PDU to which the second transmission requirement information is added. S308 includes: The access network element obtains the second transmission requirement information carried in the second PDU.

The access network element learns, based on the fourth indication information, that the GTU-U packet header of the second PDU needs to be parsed, to obtain the transmission requirement information carried in the second PDU. Therefore, after receiving the second PDU, the access network element may obtain the second transmission requirement information by parsing the GTP-U packet header of the second PDU. The second transmission requirement information is transmission requirement information that needs to be guaranteed for the first PDU set. S309 includes: The access network element transmits the first PDU set based on the second transmission requirement information.

Alternatively, after obtaining the second transmission requirement information, the access network element may further determine whether the percentage indicated by the second transmission requirement information can be guaranteed. If the access network element can guarantee the percentage, the access network element may transmit the first PDU set based on the second transmission requirement information; or if the access network element cannot guarantee the percentage, the access network element may notify the SMF or the UPF, so that the SMF or the UPF can adjust the second transmission requirement information. For this process, refer to the foregoing descriptions.

In this embodiment of this application, the UPF may include transmission requirement information in a PDU. In this case, different PDU sets may correspond to same transmission requirement information, or may correspond to different transmission requirement information. This is equivalent to that different PDU set QoS parameters may be set for different PDU sets. For example, for a PDU set having a transmission quality requirement that is not high, a waste of transmission resources can be reduced by using a PDU set QoS parameter that is set for the PDU set; and for a PDU set having a high transmission quality requirement, transmission quality can be ensured by using a PDU set QoS parameter that is set for the PDU set. In this way, different PDU sets can be separately controlled, to improve control accuracy and transmission flexibility, so that the transmission quality can be ensured, and the waste of transmission resources can be reduced.

In this embodiment of this application, the access network element may notify the SMF or the UPF whether transmission requirement information that cannot be guaranteed exists, so that the SMF or the UPF can adjust the transmission requirement information to adapt to a processing capability of the access network element.

In this embodiment of this application, a network coding process may be further introduced. For example, a network element like the UPF or the AF may perform network coding, and the integrity transmission percentage may be reduced by adding a check PDU. In this way, the requirement on the transmission quality of the air interface is reduced.

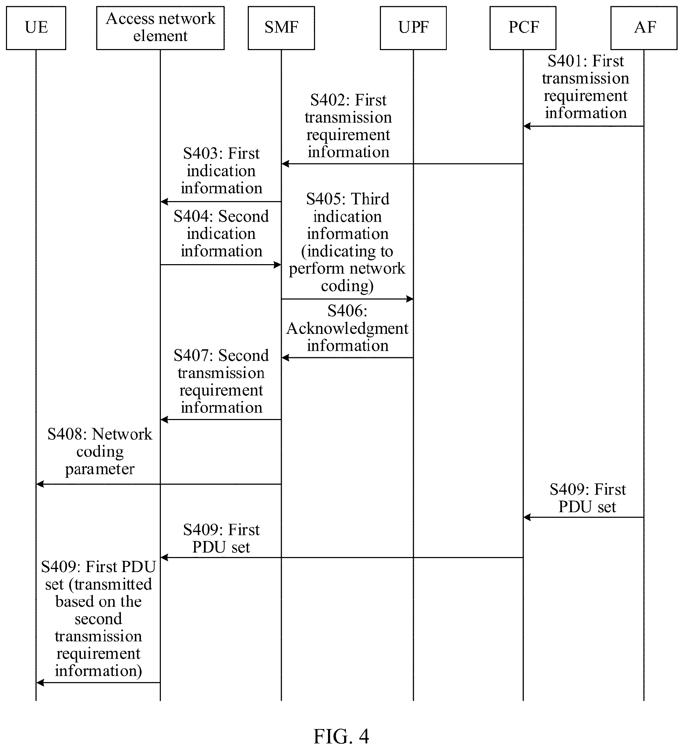

The following describes a third communication method according to an embodiment of this application. For example, FIG. 4 is a flowchart of a third communication method. As shown in FIG. 4, the method includes the following steps.

S401: An AF sends first transmission requirement information to a PCF. Correspondingly, the PCF receives the first transmission requirement information from the AF. For example, the first transmission requirement information is applicable to all PDU sets corresponding to one QoS flow.

For example, the AF may send a second message to the PCF, where the first transmission requirement information may be included in the second message, and the second message may be used to request a QoS requirement for a corresponding service. Optionally, the second message may further include a PDU set QoS parameter. For example, the second message includes a PDU set QoS parameter of a PDU set corresponding to a QoS flow to which the first transmission requirement information is applicable. Any PDU set QoS parameter may include one or more of a PSDB, PSIHI, a PSER, or the like. Optionally, the first transmission requirement information may be included in the PSIHI.

For content such as an implementation of the second message, refer to S201 in the embodiment shown in FIG. 2.

S402: The PCF sends the first transmission requirement information to an SMF. Correspondingly, the SMF receives the first transmission requirement information from the PCF.

For example, the PCF may send a PCC rule to the SMF, and the first transmission requirement information may be included in the PCC rule. Optionally, if the first request information further includes a PDU set QoS parameter, the PDU set QoS parameter may also be included in the PCC rule. For content such as an implementation of the PCC rule, refer to S202 in the embodiment shown in FIG. 2.

The SMF obtains the first transmission requirement information through S401 and S402. Alternatively, the SMF may obtain the first transmission requirement information in another manner. For example, the SMF autonomously determines the first transmission requirement information. Therefore, S401 and S402 are optional steps.

S403: The SMF sends first indication information to an access network element. Correspondingly, the access network element receives the first indication information from the SMF.

For example, the first indication information is included in information A. Optionally, the information A may further include the first transmission requirement information. For a name, a transmission manner, indicated content, or the like of the first indication information, refer to S203 in the embodiment shown in FIG. 2.

S404: The access network element sends second indication information to the SMF. Correspondingly, the SMF receives the second indication information from the access network element.

After receiving the first indication information, the access network element may determine whether transmission requirement information can be guaranteed. For example, if the access network element further obtains the first transmission requirement information, the access network element may determine whether the first transmission requirement information can be guaranteed, and the access network element may notify the SMF of this result by using the second indication information.

The second indication information may indicate that the access network element cannot guarantee the first transmission requirement information, indicate that the access network element cannot guarantee transmission requirement information, indicate that the access network element can guarantee the first transmission requirement information, or indicate that the access network element can guarantee the transmission requirement information. Optionally, the second indication information may be implemented by using one bit. If a value of the bit is "1", it indicates that the second indication information indicates that the access network element can guarantee the transmission requirement information or can guarantee the first transmission requirement information. If a value of the bit is "0", it indicates that the second indication information indicates that the transmission requirement information cannot be guaranteed or the first transmission requirement information cannot be guaranteed.

Optionally, that the access network element cannot guarantee the transmission requirement information may be understood as that the access network element cannot guarantee a percentage indicated by the transmission requirement information. For example, the first transmission requirement information may be used for one or more PDU sets. If the access network element cannot guarantee any PDU set corresponding to the first transmission requirement information, the access network element may send the second indication information. Alternatively, if the access network element cannot guarantee PDU sets whose quantity is a first threshold in all PDU sets corresponding to the first transmission requirement information, the access network element may send the second indication information. The first threshold includes, for example, a first percentage threshold or a first quantity threshold, the first quantity threshold is a quantity threshold of PDU sets that the access network element cannot guarantee, and the first percentage threshold is a percentage threshold of PDU sets that the access network element cannot guarantee. For example, for a PDU set corresponding to the first transmission requirement information, a percentage of PDU sets that the access network element cannot guarantee is greater than or equal to the first percentage threshold. For another example, for a PDU set corresponding to the first transmission requirement information, a quantity of PDU sets that the access network element cannot guarantee is greater than or equal to the first quantity threshold. That the access network element cannot guarantee the PDU set means that a percentage indicated by transmission requirement information corresponding to the PDU set cannot be guaranteed. Optionally, the first threshold may be included in the first indication information, and is sent by the SMF to the access network element; or the first threshold may be autonomously determined by the access network element.

For example, the first transmission requirement information corresponds to a first PDU set and a second PDU set. For example, when the first quantity threshold is 1, if the access network element cannot guarantee the first PDU set or the second PDU set, the access network element may send the second indication information. For another example, when the first percentage threshold is 2, if the access network element cannot guarantee the first PDU set and the second PDU set, the access network element may send the second indication information. If the access network element cannot guarantee the first PDU set but can guarantee the second PDU set, or cannot guarantee the second PDU set but can guarantee the first PDU set, the access network element may not need to send the second indication information.

Optionally, the second indication information may further include transmission requirement information expected by the access network element. The transmission requirement information expected by the access network element is determined, for example, based on a factor like performance of the access network element or a network status. For example, if a percentage indicated by the first transmission requirement information is 100%, and the access network element determines, based on a factor like an available resource in a network, that it can only be guaranteed that 90% of PDUs in a PDU set can be correctly transmitted, a percentage indicated by the transmission requirement information expected by the access network element may be less than or equal to 90%.

S405: The SMF sends third indication information to a UPF. Correspondingly, the UPF receives the third indication information from the SMF. The third indication information may indicate the UPF to perform network coding. The third indication information may also be referred to as a PDU set NC indication, or may be referred to as another name.

For example, the SMF may determine, based on the second indication information, whether the access network element cannot guarantee the first transmission requirement information. If the access network element cannot guarantee the first transmission requirement information, the SMF may indicate the UPF to perform network coding. Alternatively, if the access network element can guarantee the first transmission requirement information, the SMF may not need to indicate the UPF to perform network coding. Therefore, S405 is an optional step.

Optionally, the third indication information may further include the first transmission requirement information, or include description information of a PDU set corresponding to the first transmission requirement information, so that the UPF can determine a PDU that is in a specific PDU set and on which network coding should be performed.

Optionally, the third indication information may further include a network coding parameter. For descriptions of the network coding parameter, refer to S205 in the embodiment shown in FIG. 2. In addition, for content such as a transmission manner of the third indication information, refer to S205 in the embodiment shown in FIG. 2.

Alternatively, in this embodiment of this application, network coding may not be considered. In this case, S405 does not need to be performed.

S406: The UPF sends acknowledgment information to the SMF. Correspondingly, the SMF receives the acknowledgment information from the UPF. The acknowledgment information may be used to acknowledge to perform network coding on a PDU set, or the acknowledgment information includes the network coding parameter.

For content such as whether the acknowledgment information includes the network coding parameter, and specific network coding parameters that are included, and content such as a transmission manner of the acknowledgment information, refer to S206 in the embodiment shown in FIG. 2.

If the SMF does not send the third indication information to the UPF, or network coding is not considered in this embodiment of this application, S406 does not need to be performed. Therefore, S406 is an optional step.

S407: The SMF sends second transmission requirement information to the access network element. Correspondingly, the access network element receives the second transmission requirement information from the SMF.

If S403 to S406 are not performed, the first transmission requirement information may be used as the second transmission requirement information.

Alternatively, if S405 and S406 are performed but S403 and S404 are not performed, the second transmission requirement information may be determined based on the first transmission requirement information and the network coding parameter. For example, the SMF may determine, based on the percentage indicated by the first transmission requirement information and a network coding check percentage included in the network coding parameter, a transmission percentage indicated by the second transmission requirement information. This is equivalent to that the SMF may update the first transmission requirement information. The SMF determines, based on the percentage indicated by the first transmission requirement information and the network coding check percentage included in the network coding parameter, the percentage indicated by the second transmission requirement information. For example, in a determining manner, the SMF determines that the percentage indicated by the first transmission requirement information may be greater than or equal to a difference between the percentage indicated by the second transmission requirement information and the network coding check percentage included in the network coding parameter. For example, if the percentage indicated by the first transmission requirement information is 100%, and the network coding check percentage is 20%, the percentage indicated by the second transmission requirement information may be greater than or equal to 80%.

Alternatively, if S403 to S406 are performed, the second transmission requirement information may be determined based on the first transmission requirement information and the network coding parameter, and the network coding parameter may be determined based on the second indication information from the access network element. For example, if the SMF determines, based on the second indication information, that the access network element cannot guarantee the first transmission requirement information, the SMF may determine the network coding parameter accordingly, or the UPF may determine the network coding parameter. After receiving the acknowledgment information from the UPF, the SMF determines the second transmission requirement information based on the network coding parameter and the first transmission requirement information.

In addition, optionally, the method may further include S408. The SMF may further send the network coding parameter to UE, so that the UE decodes a PDU. For content such as sending information by the SMF to the access network element and the UE, refer to S207 in the embodiment shown in FIG. 2.

Optionally, in addition to sending the second transmission requirement information to the access network element, the SMF may further send, to the access network element, a PDU set QoS parameter or PDU set information of a PDU set corresponding to the second transmission requirement information. This is not limited herein.

Optionally, in addition to sending the second transmission requirement information to the access network element, the SMF may further send the first indication information to the access network element. For example, the second transmission requirement information and the first indication information may be included in first information and then sent to the access network element. Optionally, the first information may further include information such as a PDU set QoS parameter or PDU set information of a PDU set corresponding to the first transmission requirement information. The first indication information may indicate to notify the SMF when the access network element cannot guarantee an integrity transmission requirement indicated by transmission requirement information. In other words, although the SMF has adjusted the first transmission requirement information, the access network element may still fail to guarantee the second transmission requirement information. Therefore, the SMF may continue to send the first indication information to the access network element. For a transmission manner, indicated content, and the like of the first indication information, refer to the descriptions of S203 in the embodiment shown in FIG. 2.

S409: The access network element transmits the first PDU set based on the second transmission requirement information.

For example, if S405 and S406 are performed, when the UPF receives a downlink PDU, the UPF performs network coding on PDUs in a same PDU set based on the network coding check percentage, to add a check PDU, and add corresponding information of the PDU set to GTP-U packet headers of an original PDU and the check PDU. The corresponding information of the PDU set includes, for example, a quantity of PDUs included in the PDU set or description information of the PDU set, and may be determined based on a PDU set after the network coding. The UPF may perform network coding on a corresponding PDU set based on the indication of the SMF in S405. For example, the UPF may perform network coding on PDU sets having some indexes, or the UPF may perform network coding on PDU sets having some types of importance information or corresponding to some types of service frames. The access network element may perform integrity transmission based on the first transmission requirement information. For example, for a PDU set corresponding to the second transmission requirement information, correct transmission of the PDU set can be ensured provided that it is guaranteed that a percentage of a quantity of correctly transmitted PDUs in the PDU set is greater than or equal to an integrity transmission percentage indicated by the second transmission requirement information. In addition, the UE may further decode a received PDU based on the network coding parameter, and transfer data obtained through decoding to an application layer of the UE.

If the SMF sends only the second transmission requirement information to the access network element but does not send the first indication information, the access network element may perform S409; if the SMF sends the first indication information but the access network element can guarantee the second transmission requirement information, the access network element may perform S409; or if the SMF sends the first indication information and the access network element cannot guarantee the second transmission requirement information, the access network element may not perform S409.

For a processing manner after the access network element receives the first indication information, refer to S404. The "first transmission requirement information" in S404 may be replaced with the "second transmission requirement information". If the second indication information indicates that the access network element cannot guarantee the second transmission requirement information, S405 and S406 may continue to be performed. Through S405 and S406, the SMF may determine new transmission requirement information, for example, third transmission requirement information, and the SMF may send the third transmission requirement information to the access network element. For a manner of determining the third transmission requirement information, refer to the foregoing manner of determining the second transmission requirement information. If the access network element cannot guarantee the second transmission requirement information, the access network element may perform S409 after receiving the third transmission requirement information. After receiving the third transmission requirement information, the access network element may perform integrity transmission based on the third transmission requirement information.

Optionally, in addition to sending the third transmission requirement information to the access network element, the SMF may further continue to send the first indication information to the access network element, so that the access network element may further continue to perform reporting if the access network element cannot guarantee the third transmission requirement information. This is not limited.

It has been stated in the foregoing that, to reduce a requirement on transmission quality of an air interface, in this embodiment of this application, a manner of indicating the UPF to perform network coding may be used. In addition, another manner may alternatively be used, in other words, S405 and S406 may alternatively be replaced with the following steps. For example, if the SMF determines, based on the second indication information from the access network element, that the access network element cannot guarantee the first transmission requirement information, or the SMF autonomously determines that the access network element cannot guarantee the first transmission requirement information, the SMF may not need to indicate the UPF to perform network coding, but may send a third message to the AF. The third message may indicate that the access network element cannot guarantee transmission requirement information, or indicate that the access network element cannot guarantee the first transmission requirement information.

After receiving the third message, the AF may perform application layer adjustment. For example, the AF performs a processing process like network coding, reducing a frame rate, reducing a coding speed, or reducing a resolution. In addition, the AF may further send (for a sending manner, refer to the descriptions of S401), to the SMF, updated transmission requirement information, for example, referred to as the second transmission requirement information. The second transmission requirement information may be obtained by adjusting the first transmission requirement information, or may be re-determined transmission requirement information. After receiving the second transmission requirement information, the SMF may perform S407. Optionally, in addition to sending the second transmission requirement information to the access network element, the SMF may further send the first indication information to the access network element. After receiving the first indication information, if the access network element cannot guarantee the second transmission requirement information, the access network element may notify the SMF. In this case, the SMF may send a message to the AF again, and the AF performs adjustment again. For example, the AF obtains, through adjustment, new transmission requirement information, referred to as the third transmission requirement information. The AF may send the third transmission requirement information to the SMF again, and then the SMF sends the third transmission requirement information to the access network element. The rest may be deduced by analogy.

Optionally, the percentage corresponding to the second transmission requirement information may be less than the percentage corresponding to the first transmission requirement information. This is equivalent to that an integrity transmission percentage is reduced by adjusting the AF, thereby reducing the requirement on the transmission quality of the air interface. Certainly, this is not limited thereto. For example, the percentage corresponding to the second transmission requirement information may alternatively be greater than or equal to the percentage corresponding to the first transmission requirement information, and may be implemented by the AF.

In this embodiment of this application, the access network element may notify the SMF whether transmission requirement information cannot be guaranteed, so that the SMF can adjust the transmission requirement information, and the adjustment by the SMF is more targeted. In this embodiment of this application, a network coding process may be further introduced. For example, a network element like the UPF or the AF may perform network coding, and the integrity transmission percentage may be reduced by adding a check PDU. In this way, the requirement on the transmission quality of the air interface is reduced.

It should be noted that in this application, all or some of any different features in any different embodiments may be freely combined. A combined technical solution also falls within the scope of this application.

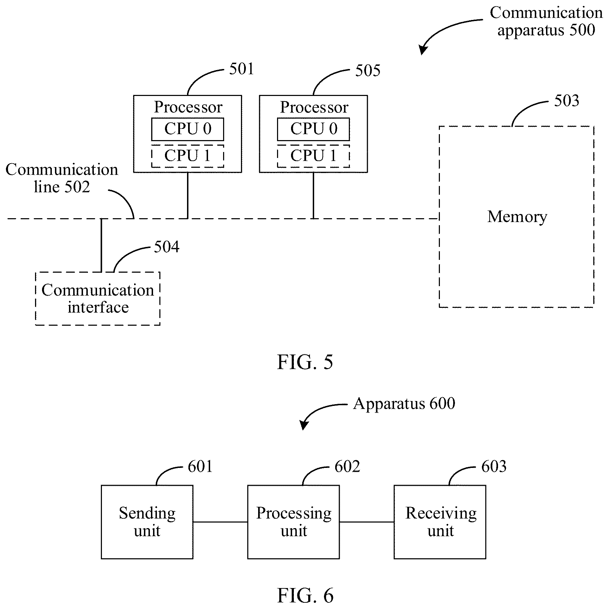

FIG. 5 is a diagram of a structure of a communication apparatus according to an embodiment of this application. The communication apparatus 500 may be the access network element in any one of the embodiments shown in FIG. 2 to FIG. 4 or a circuit system of the access network element, and is configured to implement the method corresponding to the access network element in the foregoing method embodiments. Alternatively, the communication apparatus 500 may be the SMF in any one of the embodiments shown in FIG. 2 to FIG. 4 or a circuit system of the SMF, and is configured to implement the method corresponding to the SMF in the foregoing method embodiments. Alternatively, the communication apparatus 500 may be the UPF in any one of the embodiments shown in FIG. 2 to FIG. 4 or a circuit system of the UPF, and is configured to implement the method corresponding to the UPF in the foregoing method embodiments. For specific functions, refer to the descriptions of the foregoing method embodiments. For example, a circuit system is a chip system.

The communication apparatus 500 includes at least one processor 501. The processor 501 may be configured to perform internal processing of the apparatus, to implement a specific control processing function. Optionally, the processor 501 includes instructions. Optionally, the processor 501 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 500 includes one or more memories 503, configured to store instructions. Optionally, the memory 503 may further store data. The processor and the memory may be separately disposed, or may be integrated together.

Optionally, the communication apparatus 500 includes a communication line 502 and at least one communication interface 504. Because the memory 503, the communication line 502, and the communication interface 504 are all optional, the memory 503, the communication line 502, and the communication interface 504 are all indicated by dashed lines in FIG. 5.

Optionally, the communication apparatus 500 may further include a transceiver or an antenna. The transceiver may be configured to: send information to another apparatus, or receive information from another apparatus. The transceiver may be referred to as a transceiver machine, a transceiver circuit, an input/output interface, or the like, and is configured to implement a transceiver function of the communication apparatus 500 via the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 501 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 502 may include a path for information transfer between the foregoing components.

The communication interface 504 uses any apparatus like a transceiver, and is configured to communicate with another device or a communication network, for example, the Ethernet, a radio access network (radio access network, RAN), a wireless local area network (wireless local area network, WLAN), or a wired access network.

The memory 503 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (which includes a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory 503 is not limited thereto. The memory 503 may exist independently, and is connected to the processor 501 through the communication line 502. Alternatively, the memory 503 may be integrated with the processor 501.

The memory 503 is configured to store computer-executable instructions for performing the solutions of this application, and the processor 501 controls execution. The processor 501 is configured to execute the computer-executable instructions stored in the memory 503, to implement the communication method provided in the foregoing embodiments of this application.

Optionally, the computer-executable instructions in embodiments of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 505 shown in FIG. 5. Each of the processors may be a single-core (single-CPU) processor, or may be a multicore (multi-CPU) processor. The processor herein may be one or more devices, circuits, or processing cores configured to process data (for example, computer program instructions).

When the apparatus shown in FIG. 5 is a chip, for example, a chip of first UE, a chip of second UE, or a chip of UE, the chip includes the processor 501 (the processor 505 may be further included), the communication line 502, the memory 503, and the communication interface 504. Specifically, the communication interface 504 may be an input interface, a pin, a circuit, or the like. The memory 503 may be a register, a cache, or the like. The processor 501 and the processor 505 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. For example, when each functional module is obtained through division based on each corresponding function, FIG. 6 is a diagram of an apparatus. The apparatus 600 may be an access network element, an SMF, or a UPF in the foregoing method embodiments, or a chip in the access network element, a chip in the SMF, or a chip in the UPF. The apparatus 600 includes a sending unit 601, a processing unit 602, and a receiving unit 603.

It should be understood that the apparatus 600 may be configured to implement the steps performed by the access network element, the SMF, or the UPF in the method in embodiments of this application. For related features, refer to the foregoing embodiments. Details are not described herein again.

Optionally, functions/implementation processes of the sending unit 601, the receiving unit 603, and the processing unit 602 in FIG. 6 may be implemented by the processor 501 in FIG. 5 by invoking the computer-executable instructions stored in the memory 503. Alternatively, a function/an implementation process of the processing unit 602 in FIG. 6 may be implemented by the processor 501 in FIG. 5 by invoking the computer-executable instructions stored in the memory 503, and functions/implementation processes of the sending unit 601 and the receiving unit 603 in FIG. 6 may be implemented through the communication interface 504 in FIG. 5.

Optionally, when the apparatus 600 is a chip or a circuit, the functions/implementation processes of the sending unit 601 and the receiving unit 603 may alternatively be implemented through a pin, a circuit, or the like.

This application further provides a computer-readable storage medium. The computer-readable storage medium stores a computer program or instructions. When the computer program or the instructions are run, the method performed by the access network element, the SMF, or the UPF in the foregoing method embodiments is implemented. In this way, the functions in the foregoing embodiments may be implemented in a form of a software functional unit and sold or used as an independent product. Based on such an understanding, the technical solutions of this application essentially, the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the access network element, the SMF, or the UPF in any one of the foregoing method embodiments.

An embodiment of this application further provides a processing apparatus, including a processor and an interface. The processor is configured to perform the method performed by the access network element, the SMF, or the UPF in any one of the foregoing method embodiments.

All or some of the foregoing embodiments may be implemented by software, hardware, firmware, or any combination thereof. When the software is used for the implementation, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Various illustrative logic units and circuits described in embodiments of this application may implement or operate the described functions by a general-purpose processor, a digital signal processor (digital signal processor, DSP), an ASIC, a field-programmable gate array (field-programmable gate array, FPGA), another programmable logic apparatus, a discrete gate, a transistor logic, a discrete hardware component, or a design of any combination thereof. The general-purpose processor may be a microprocessor. Optionally, the general-purpose processor may be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor can read information from the storage medium and write information into the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different components of the terminal device.

Alternatively, these computer program instructions may be loaded onto a computer or another programmable data processing device, so that a series of operations and steps are performed on the computer or the another programmable device, thereby generating computerimplemented processing. Therefore, the instructions executed on the computer or the another programmable device provide steps for implementing a specified function in one or more procedures in the flowcharts or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. It is clear that a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, applied to a first network element, wherein the method comprises:
receiving a first message from a second network element, wherein the first message comprises first information, the first information indicates a first mapping relationship between a first parameter and first transmission requirement information, the first parameter indicates a first attribute of a first protocol data unit PDU set set, the first transmission requirement information indicates a percentage of a first quantity in a total quantity of PDUs comprised in the first PDU set, and the first quantity is a quantity of PDUs that need to be correctly transmitted by the first network element during transmission of the first PDU set; and
transmitting the first PDU set based on the first transmission requirement information.

2. The method according to claim 1, wherein transmitting the first PDU set based on the first transmission requirement information comprises:
when the first parameter is a first value, transmitting the first PDU set based on a first percentage, wherein the first transmission requirement information indicates the first percentage; or
when the first parameter is a second value, transmitting the first PDU set based on a second percentage, wherein the first transmission requirement information indicates the second percentage.

3. The method according to claim 1, wherein transmitting the first PDU set based on the first transmission requirement information comprises:
when the first parameter indicates a first type, transmitting the first PDU set based on a first percentage, wherein the first transmission requirement information indicates the first percentage; or
when the first parameter indicates a second type, transmitting the first PDU set based on a second percentage, wherein the first transmission requirement information indicates the second percentage.

4. The method according to claim 1, wherein that the first information indicates the first mapping relationship between the first parameter and the first transmission requirement information comprises:
the first information indicates the first mapping relationship between the first transmission requirement information and both the first parameter and a second parameter, and the second parameter indicates a second attribute of the first PDU set.

5. The method according to claim 4, wherein transmitting the first PDU set based on the first transmission requirement information comprises:
when the first parameter is a first value and the second parameter is a third value, transmitting the first PDU set based on a first percentage, wherein the first transmission requirement information indicates the first percentage; or
when the first parameter is a second value and the second parameter is a fourth value, transmitting the first PDU set based on a second percentage, wherein the first transmission requirement information indicates the second percentage.

6. The method according to any one of claims 1 to 5, wherein the first attribute is importance of the first PDU set, or the first attribute is a type of a service frame corresponding to the first PDU set.

7. The method according to any one of claims 1 to 6, wherein the first information is comprised in an N2 session management SM container in the first message, wherein
the first information is comprised in a quality of service QoS profile profile in the N2 SM container; or
the N2 SM container further comprises a QoS profile, and the first information is not comprised in the QoS profile.

8. The method according to claim 7, wherein
the first information is comprised in the QoS profile, the QoS profile further comprises PDU set integrated handling information PSIHI, and the first information is not comprised in the PSIHI; or
the first information is comprised in PSIHI in the QoS profile.

9. The method according to any one of claims 1 to 8, wherein the first information further comprises first indication information, and the first indication information indicates to notify the second network element when the first network element cannot guarantee the percentage indicated by the first transmission requirement information.

10. The method according to claim 9, wherein the method further comprises:
when the first network element cannot guarantee the percentage, sending second indication information to the second network element, wherein the second indication information indicates that the first network element cannot guarantee the percentage.

11. The method according to claim 10, wherein when the first network element cannot guarantee the percentage, sending the second indication information to the second network element comprises:
when the first network element cannot guarantee the percentage for the first PDU set, sending the second indication information; or
when the first network element cannot guarantee the percentage for PDU sets whose quantity is a first threshold, sending the second indication information, wherein the PDU sets whose quantity is the first threshold comprise the first PDU set.

12. The method according to claim 11, wherein the first threshold is comprised in the first indication information.

13. The method according to any one of claims 10 to 12, wherein the second indication information further comprises transmission requirement information expected by the first network element.

14. A communication method, applied to a second network element, wherein the method comprises:
sending a first message to a first network element, wherein the first message comprises first information, the first information indicates a first mapping relationship between a first parameter and first transmission requirement information, the first parameter indicates a first attribute of a first protocol data unit PDU set, the first transmission requirement information indicates a percentage of a first quantity in a total quantity of PDUs comprised in the first PDU set, and the first quantity is a quantity of PDUs that need to be correctly transmitted by the first network element during transmission of the first PDU set.

15. The method according to claim 14, wherein
when the first parameter is a first value, the first transmission requirement information indicates a first percentage; or
when the first parameter is a second value, the first transmission requirement information indicates a second percentage.

16. The method according to claim 14, wherein
when the first parameter indicates a first type, the first transmission requirement information indicates a first percentage; or
when the first parameter indicates a second type, the first transmission requirement information indicates a second percentage.

17. The method according to claim 14, wherein that the first information indicates the first mapping relationship between the first parameter and the first transmission requirement information comprises:
the first information indicates the first mapping relationship between the first transmission requirement information and both the first parameter and a second parameter, and the second parameter indicates a second attribute of the first PDU set.

18. The method according to claim 17, wherein
when the first parameter is a first value and the second parameter is a third value, the first transmission requirement information indicates a first percentage; or
when the first parameter is a second value and the second parameter is a fourth value, the first transmission requirement information indicates a second percentage.

19. The method according to any one of claims 14 to 18, wherein the first attribute is importance of the first PDU set, or the first attribute is a type of a service frame corresponding to the first PDU set.

20. The method according to any one of claims 14 to 19, wherein the method further comprises:
sending third indication information to a third network element, wherein the third indication information indicates the third network element to perform network coding; and
receiving acknowledgment information from the third network element, wherein the acknowledgment information is used to acknowledge to perform network coding on the first PDU set, or the acknowledgment information comprises a parameter for performing network coding on the first PDU set.

21. The method according to claim 20, wherein the third indication information further comprises the first parameter.

22. The method according to claim 20 or 21, wherein the third indication information further comprises the parameter for performing network coding on the first PDU set.

23. A communication method, applied to a first network element, wherein the method comprises:
receiving a first PDU from a third network element;
obtaining first transmission requirement information carried in the first PDU, wherein the first transmission requirement information indicates a percentage of a first quantity in a total quantity of PDUs comprised in the first PDU set, the first quantity is a quantity of PDUs that need to be correctly transmitted by the first network element during transmission of the first PDU set, and the first PDU set is a PDU set to which the first PDU belongs; and
transmitting the first PDU set based on the first transmission requirement information.

24. The method according to claim 23, wherein the method further comprises:
sending fifth indication information to the third network element or a second network element, wherein the fifth indication information indicates that the first network element does not support the percentage indicated by the first transmission requirement information.

25. The method according to claim 24, wherein the fifth indication information further comprises transmission requirement information expected by the first network element.

26. The method according to claim 24 or 25, wherein the method further comprises:
receiving a second PDU from the third network element, wherein the second PDU belongs to the first PDU set;
obtaining second transmission requirement information carried in the second PDU; and
transmitting the first PDU set based on the second transmission requirement information.

27. The method according to any one of claims 24 to 26, wherein the method further comprises:
receiving fourth indication information from the second network element, wherein the fourth indication information indicates to parse transmission requirement information carried in a PDU.

28. A communication method, applied to a third network element, wherein the method comprises:
comprising first transmission requirement information in a PDU comprised in a first PDU set, wherein the first transmission requirement information indicates a percentage of a first quantity in a total quantity of PDUs comprised in the first PDU set, and the first quantity is a quantity of PDUs that need to be correctly transmitted by the first network element during transmission of the first PDU set; and
sending the PDU comprised in the first PDU set to the first network element.

29. The method according to claim 28, wherein the method further comprises:
receiving fifth indication information from the first network element, wherein the fifth indication information indicates that the first network element does not support the percentage indicated by the first transmission requirement information.

30. The method according to claim 29, wherein the fifth indication information further comprises transmission requirement information expected by the first network element.

31. The method according to claim 28, wherein the method further comprises:
receiving third indication information from a second network element, wherein the third indication information indicates the third network element to perform network coding; and
sending acknowledgment information to the second network element, wherein the acknowledgment information is used to acknowledge to perform network coding on the first PDU set, or the acknowledgment information comprises a parameter for performing network coding on the first PDU set.

32. The method according to any one of claims 28 to 31, wherein the method further comprises:
performing network coding on the PDU comprised in the first PDU set, wherein after the network coding is performed, transmission requirement information of the first PDU set is changed to second transmission requirement information; and
sending the PDU comprised in the first PDU set to the first network element, wherein the PDU comprised in the first PDU set carries the second transmission requirement information.

33. A communication apparatus, comprising a processor and a memory, wherein the memory is coupled to the processor, and the processor is configured to perform the method according to any one of claims 1 to 13, configured to perform the method according to any one of claims 14 to 22, configured to perform the method according to any one of claims 23 to 27, or configured to perform the method according to any one of claims 28 to 32.

34. A computer-readable storage medium, wherein the computer-readable storage medium is configured to store a computer program; and when the computer program is run on a computer, the computer is enabled to perform the method according to any one of claims 1 to 13, the computer is enabled to perform the method according to any one of claims 14 to 22, the computer is enabled to perform the method according to any one of claims 23 to 27, or the computer is enabled to perform the method according to any one of claims 28 to 32.

35. A chip system, wherein the chip system comprises:
a processor and an interface, wherein the processor is configured to: invoke instructions from the interface, and run the instructions; and when the processor executes the instructions, the method according to any one of claims 1 to 13 is implemented, the method according to any one of claims 14 to 22 is implemented, the method according to any one of claims 23 to 27 is implemented, or the method according to any one of claims 28 to 32 is implemented.

36. A computer program product, wherein the computer program product comprises a computer program; and when the computer program is run on a computer, the computer is enabled to perform the method according to any one of claims 1 to 13, the computer is enabled to perform the method according to any one of claims 14 to 22, the computer is enabled to perform the method according to any one of claims 23 to 27, or the computer is enabled to perform the method according to any one of claims 28 to 32.
